(19)

Europäisches
Patentamt
European
Patent Office
Office européen
des brevets

(11) **EP 4 224 769 A1**

(12) **EUROPEAN PATENT APPLICATION**
published in accordance with Art. 153(4) EPC

(43) Date of publication:
**09.08.2023   Bulletin 2023/32**

(21) Application number: **21876038.7**

(22) Date of filing: **29.09.2021**

(51) International Patent Classification (IPC):
*H04L 5/00* [(2006.01)]    *H04B 7/0404* [(2017.01)]
*H04B 7/06* [(2006.01)]    *H04W 52/14* [(2009.01)]
*H04W 72/12* [(2023.01)]

(52) Cooperative Patent Classification (CPC):
**H04B 7/0404; H04B 7/06; H04L 5/00; H04W 52/14;
H04W 72/12**

(86) International application number:
**PCT/KR2021/013362**

(87) International publication number:
**WO 2022/071763 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.09.2020   KR 20200126941**

(71) Applicant: **LG Electronics Inc.**
**Yeongdeungpo-gu**
**Seoul, 07336 (KR)**

(72) Inventors:
• **CHUNG, Jaehoon**
  **Seoul 06772 (KR)**
• **KANG, Jiwon**
  **Seoul 06772 (KR)**
• **GO, Seongwon**
  **Seoul 06772 (KR)**

(74) Representative: **Frenkel, Matthias Alexander**
**Wuesthoff & Wuesthoff**
**Patentanwälte PartG mbB**
**Schweigerstraße 2**
**81541 München (DE)**

(54) **METHOD AND DEVICE FOR TRANSMITTING AND RECEIVING UPLINK IN WIRELESS COMMUNICATION SYSTEM**

(57)     Disclosed are a method and device for transmitting or receiving an uplink in a wireless communication system. A method for transmitting an uplink according to an embodiment of the present disclosure may comprise the steps of: receiving, from a base station, configuration information related to uplink transmission; receiving one or more pathloss reference signals (PL RSs) configured according to the configuration information; estimating pathloss by using the one or more PL RSs; and performing the uplink transmission on the basis of the estimated pathloss. On the basis that the terminal supports multi-panels, the maximum number of PL RSs configurable in the terminal can be determined on the basis of the number of panels of the terminal.

FIG.9

Receive configuration information related to uplink transmission — S901

Receive pathloss reference signal — S902

Estimate pathloss — S903

Transmit uplink based on estimated pathloss — S904

EP 4 224 769 A1

**Description**

[Technical Field]

The present disclosure relates to a wireless communication system, and in more detail, relates to a method and an apparatus of transmitting and receiving an uplink in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting and receiving an uplink channel and/or a signal.

In addition, an additional technical object of the present disclosure is to provide a method and an apparatus for configuring/activating a pathloss reference signal for an uplink channel and/or a signal for a multi-panel terminal.

In addition, an additional technical object of the present disclosure is to provide a method and an apparatus for transmitting and receiving an uplink channel and/or a signal based on a configured/activated pathloss reference signal.

The technical objects to be achieved by the present disclosure are not limited to the above-described technical objects, and other technical objects which are not described herein will be clearly understood by those skilled in the pertinent art from the following description.

[Technical Solution]

A method of uplink transmission in a wireless communication system according to an aspect of the present disclosure, the method performed by a user equipment (UE) may include: receiving, from a base station, configuration information related to uplink transmission; receiving one or more pathloss reference signals (PL RSs) configured by the configuration information; estimating a pathloss using the one or more PL RSs; and performing the uplink transmission based on the estimated pathloss. Based on the UE supporting multi-panels, a maximum number of PL RSs configurable for the UE may be determined based on a number of panels of the UE.

A method of receiving an uplink in a wireless communication system according to an additional aspect of the present disclosure, the method performed by a base station may include: transmitting, to a user equipment (UE), configuration information related to uplink transmission; transmitting, to the UE, one or more pathloss reference signals (PL RSs) configured by the configuration information; and receiving, from the UE, the uplink transmission. The uplink transmission may be transmitted based on the estimated pathloss, and based on the UE supporting multi-panels, a maximum number of PL RSs configurable for the UE may be determined based on a number of panels of the UE.

[Advantageous Effects]

According to an embodiment of the present disclosure, for a multi-panel UE, a pathloss reference signal can be configured/activated for each panel.

In addition, according to an embodiment of the present disclosure, panel-specific uplink transmission power control and pathloss tracking can be performed.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram illustrating a multi-panel UE in a wireless communication system to which the present disclosure can be applied.

FIG. 8 is a diagram illustrating a signaling procedure between a base station and a UE for a method for transmitting and receiving an uplink signal according to an embodiment of the present disclosure.

FIG. 9 is a diagram illustrating an operation of a UE for an uplink transmission and reception method according to an embodiment of the present disclosure.

FIG. 10 is a diagram illustrating an operation of a base station for an uplink transmission and reception method according to an embodiment of the present disclosure.

FIG. 11 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network (5G network), an AI (Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS (Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing

- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

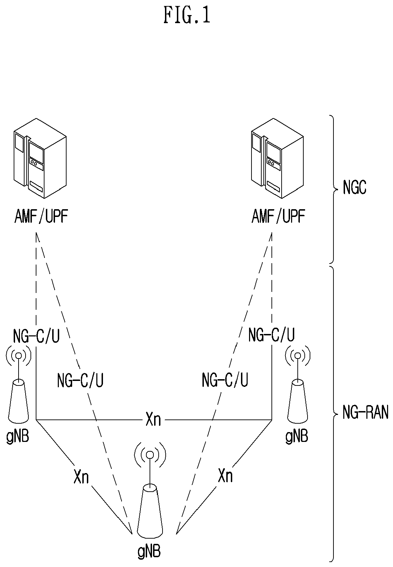

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

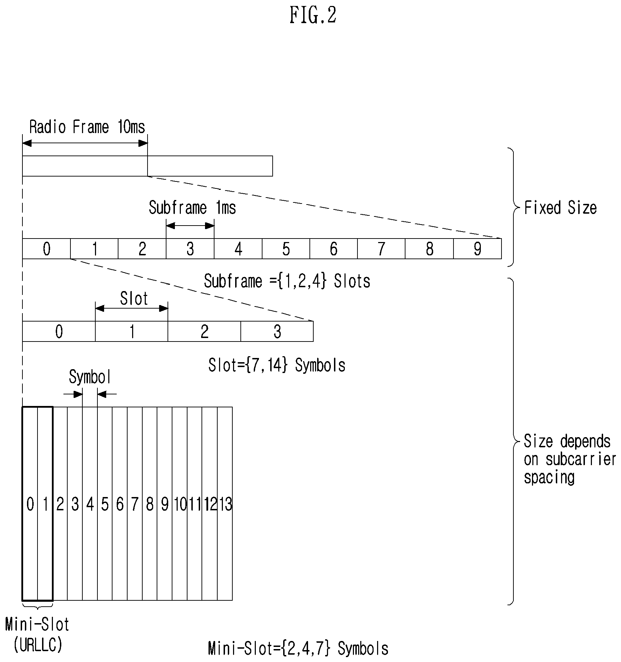

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |

(continued)

| μ | Δf=2$^μ$·15 [kHz] | CP |
|---|---|---|
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is 480·103 Hz and $N_f$ is 4096. Downlink and uplink transmission is configured (organized) with a radio frame having a duration of $T_f=1/(\Delta f_{max}N_f/100)\cdot T_c$=10ms. Here, a radio frame is configured with 10 subframes having a duration of $T_{sf}=(\Delta f_{max}N_d/1000)\cdot T_c$=1ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^μ \in \{0, ..., N_{slot}^{subframe,μ}-1\}$ in a subframe and are numbered in an increasing order of $n_{s,f}^μ \in \{0, ..., N_{slot}^{frame,μ}-1\}$ in a radio frame. One slot is configured with $N_{symb}^{slot}$ consecutive OFDM symbols and $N_{symb}^{slot}$ is determined according to CP. A start of a slot $n_s^μ$ in a subframe is temporally arranged with a start of an OFDM symbol $n_s^μ N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,μ}$) and the number of slots per subframe ($N_{siot}^{subframe,μ}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,μ}$ | $N_{slot}^{subframe,μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,μ}$ | $N_{slot}^{subframe,μ}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

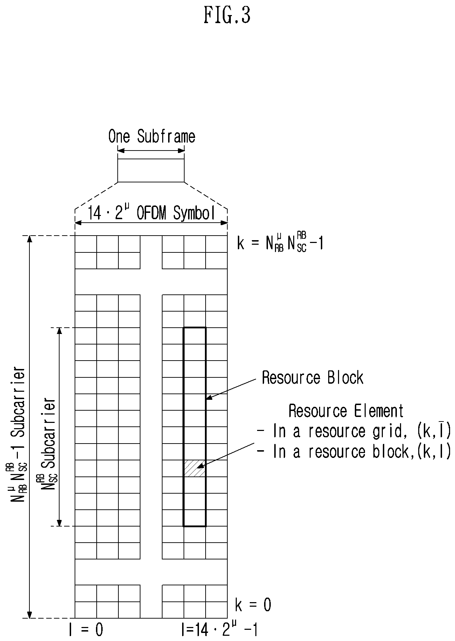

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, k=0,..., $N_{RB}^{\mu}N_{sc}^{RB}$-1 is an index in a frequency domain and l'=0, ..., $2^{\mu}N_{symb}^{(\mu)}$-1 refers to a position of a symbol in a subframe. When referring to a resource element in a slot, an index pair (k,l) is used. Here, l=0, ..., $N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

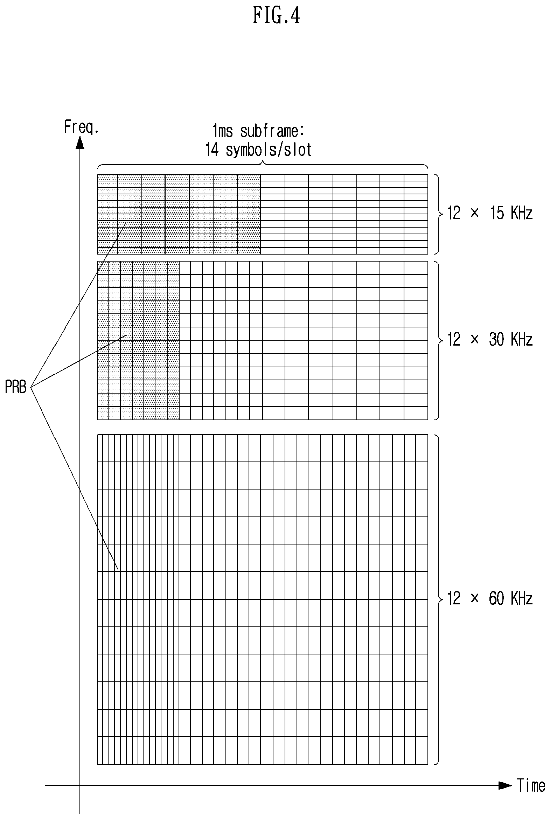

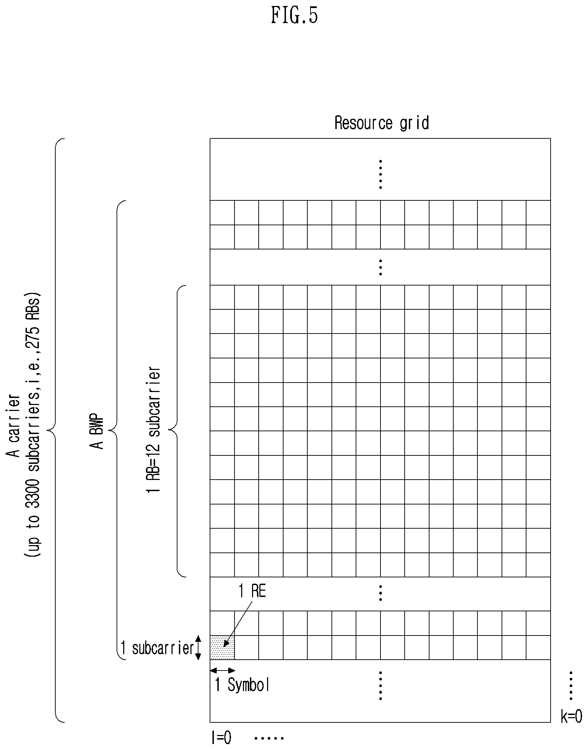

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

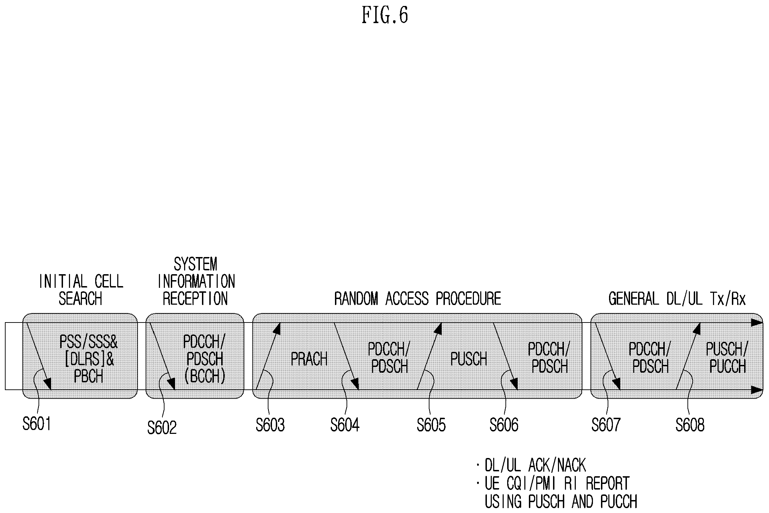

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Uplink power control

In a wireless communication system, it may be necessary to increase or decrease transmission power of a terminal (e.g., User Equipment, UE) and/or a mobile device according to circumstances. In this way, controlling the transmission power of a terminal and/or a mobile device may be referred to as uplink power control. As an example, a transmission power control method may be applied to satisfy a requirement (e.g., Signal-to-Noise Ratio (SNR), Bit Error Ratio (BER), Block Error Ratio (BLER)) etc.) of a base station (e.g., gNB, eNB, etc.).

Power control as described above may be performed in an open-loop power control scheme and a closed-loop power control scheme.

Specifically, an open-loop power control method means a method of controlling transmission power without feedback from a transmitting device (e.g., a base station, etc.) to a receiving device (e.g., a terminal, etc.) and/or feedback from a receiving device to a transmitting device. For example, a terminal may receive a specific channel/signal from a base station, and may estimate strength of the received power using that. Thereafter, a terminal may control transmission power using the estimated strength of the received power.

In contrast, a closed-loop power control method means a method of controlling transmission power based on feedback from a transmitting device to a receiving device and/or feedback from a receiving device to a transmitting device. For example, a base station receives a specific channel/signal from a terminal, and determines an optimal power level of a terminal based on the power level, SNR, BER, BLER, etc. measured by the received specific channel/signal. A base station transmits information (i.e., feedback) on the determined optimal power level to a terminal through a control channel, etc., and a terminal may control transmission power using the feedback provided by a base station.

Hereinafter, a power control method for cases in which a terminal and/or a mobile device perform uplink transmission to a base station in a wireless communication system will be described in detail.

Specifically, power control methods for transmission of 1) an uplink data channel (e.g., a Physical Uplink Shared Channel (PUSCH)), 2) an uplink control channel (e.g., Physical Uplink Control Channel (PUCCH)), 3) a Sounding Reference Signal (SRS), 4) a random access channel (e.g., physical random access channel (PRACH)) will be described below. Here, a transmission occasion (i.e., a transmission time unit) (i) for a PUSCH, a PUCCH, an SRS and/or a PRACH may be defined by a slot index (n_s) within a frame of a system frame number (SFN), the first symbol (S) in a slot, the number of consecutive symbols (L), etc.

Hereinafter, for convenience of description, a power control method will be described based on a case in which a terminal performs PUSCH transmission. The method may be extended and applied to other uplink data channels supported in a wireless communication system.

In the case of PUSCH transmission in an active uplink bandwidth part (UL BWP) of a carrier (f) of a serving cell (c), a terminal may calculate a linear power value of transmission power determined by Equation 3 below. Thereafter, the corresponding terminal may control the transmission power by taking the calculated linear power value into consideration, such as the number of antenna ports and/or the number of SRS ports.

Specifically, by using a parameter set configuration based on index j and a PUSCH power control adjustment state based on index I, when a terminal performs PUSCH transmission in an activated UL BWP (b) of a carrier (f) of a serving cell (c), the terminal may determine PUSCH transmission power $P_{PUSCH,b,f,c}(i,j,q_d,l)$(dBm) at a PUSCH transmission occasion (i) based on Equation 3 below.

【Equation 3】

$$P_{\mathrm{PUSCH}b,f,c}(i,j,q_d,l) = \min\left\{ \begin{array}{l} P_{\mathrm{CMAX}f,c}(i), \\ P_{\mathrm{O\_PUSCH}b,f,c}(j) + 10\log_{10}(2^{\mu} \cdot M_{\mathrm{RB}b,f,c}^{\mathrm{PUSCH}}(i)) + \alpha_{b,f,c}(j) \cdot PL_{b,f,c}(q_d) + \Delta_{\mathrm{TF}b,f,c}(i) + f_{b,f,c}(i,l) \end{array} \right\}$$

In Equation 3, index j represents an index for an open-loop power control parameter (e.g., $P_O$, $\alpha$ (alpha), etc.), and a maximum of 32 parameter sets per cell may be configured. Index q_d represents an index of a DL RS resource for a path loss (PL) measurement (e.g., $PL_{b,f,c}(q_d)$), and up to four measurements may be configured per cell. Index I represents an index for a closed-loop power control process, and a maximum of two processes per cell may be configured.

Specifically, $P_O$ (e.g., $P_{O\_PUSCH,b,f,c}(j)$) is a parameter broadcast as part of system information, and may indicate a target reception power at a receiving side. The corresponding $P_O$ value may be configured in consideration of throughput of a terminal, capacity of a cell, noise and/or interference, etc. In addition, alpha (e.g., $\alpha_{b,f,c}(j)$) may represent a rate at which compensation for path loss is performed. Alpha may be configured to a value from 0 to 1, and full pathloss compensation or fractional pathloss compensation may be performed according to the set value. In this case, the alpha value may be configured in consideration of interference between terminals and/or data rate. In addition, $P_{CMAX,f,c}(i)$ may represent a configured UE transmit power. For example, the configured terminal transmission power may be interpreted as 'configured maximum UE output power' defined in 3GPP TS 38.101-1 and/or TS 38.101-2. In addition, $M_{RB,b,f,c}^{PUSCH}(i)$ may represent a bandwidth of PUSCH resource allocation expressed by the number of resource blocks (RBs) for a PUSCH transmission occasion based on subcarrier spacing ($\mu$). In addition, $f_{b,f,c}(i,l)$ related to a PUSCH power control adjustment state may be configured or indicated based on a TPC command field of DCI (e.g., DCI format 0_0, DCI format 0_1, DCI format 2_2, DCI format2_3, etc.).

In this case, a specific RRC (Radio Resource Control) parameter (e.g., SRI-PUSCHPowerControl-Mapping, etc.) may represent a linkage between an SRI (SRS Resource Indicator) field of DCI (downlink control information) and the above-mentioned indexes j, q_d, l. In other words, the aforementioned indexes j, l, q_d, etc. may be associated with a beam, a panel, and/or a spatial domain transmission filter, etc. based on specific information. Through this, PUSCH transmission power control in units of beams, panels, and/or spatial domain transmission filters may be performed.

The above-described parameters and/or information for PUSCH power control may be individually (i.e., independently) configured for each BWP. In this case, corresponding parameters and/or information may be configured or indicated through higher layer signaling (e.g., RRC signaling, Medium Access Control-Control Element (MAC-CE), etc.) and/or DCI. As an example, parameters and/or information for PUSCH power control may be transmitted through RRC signaling PUSCH-ConfigCommon, PUSCHPowerControl, etc., and PUSCH-ConfigCommon and PUSCHPowerControl may be configured as shown in Table 6 below.

【Table 6】

```
PUSCH-ConfigCommon ::=                     SEQUENCE {
     groupHoppingEnabledTransformPrecoding   ENUMERATED {enabled}
     pusch-TimeDomainAllocationList          PUSCH-TimeDomainResourceAllocationList
     msg3-DeltaPreamble                      INTEGER (-1..6)
     p0-NominalWithGrant                     INTEGER (-202..24)
     ...
}


PUSCH-PowerControl ::=              SEQUENCE {
     tpc-Accumulation               ENUMERATED { disabled }
     msg3-Alpha                     Alpha
     p0-NominalWithoutGrant         INTEGER (-202..24)
     p0-AlphaSets                   SEQUENCE (SIZE (1..maxNrofP0-PUSCH-AlphaSets)) OF P0-
PUSCH-AlphaSet
     pathlossReferenceRSToAddModList    SEQUENCE (SIZE (1..maxNrofPUSCH-PathlossReferenceRSs))
OF PUSCH-PathlossReferenceRS
     pathlossReferenceRSToReleaseList              SEQUENCE      (SIZE     (1..maxNrofPUSCH-
PathlossReferenceRSs)) OF PUSCH-PathlossReferenceRS-Id
     twoPUSCH-PC-AdjustmentStates       ENUMERATED {twoStates}
     deltaMCS                       ENUMERATED {enabled}
     sri-PUSCH-MappingToAddModList      SEQUENCE (SIZE (1..maxNrofSRI-PUSCH-Mappings)) OF SRI-
PUSCH-PowerControl
     sri-PUSCH-MappingToReleaseList     SEQUENCE (SIZE (1..maxNrofSRI-PUSCH-Mappings)) OF SRI-
PUSCH-PowerControlId
  }
```

Through the method as described above, a terminal may determine or calculate PUSCH transmission power, and may transmit a PUSCH using the determined or calculated PUSCH transmission power.

Hereinafter, for convenience of description, a power control method will be described based on a case in which a terminal performs PUCCH transmission. The method may be extended and applied to other uplink control channels supported in a wireless communication system.

Specifically, by using a PUCCH power control adjustment state based on index l, when a terminal performs PUCCH transmission in an activated UL BWP (b) of a carrier (f) of a primary cell (or secondary cell) (c), a terminal may determine PUCCH transmission power $P_{PUCCH,b,f,c}(i,q_u,q_d,l)$ (dBm) at a PUCCH transmission occasion (i) based on Equation 4 below.

【Equation 4】

$$P_{\text{PUCCH},b,f,c}(i,q_u,q_d,l) = \min \left\{ \begin{array}{l} P_{\text{CMAX},f,c}(i), \\ P_{\text{O\_PUCCH},b,f,c}(q_u) + 10\log_{10}(2^{\mu} \cdot M_{\text{RB},b,f,c}^{\text{PUCCH}}(i)) + PL_{b,f,c}(q_d) + \Delta_{\text{F\_PUCCH}}(F) + \Delta_{\text{TF},b,f,c}(i) + g_{b,f,c}(i,l) \end{array} \right\}$$

In Equation 4, q_u represents an index for an open-loop power control parameter (e.g., $P_O$, etc.), and a maximum of 8 parameter values per cell may be configured. Index q_d represents an index of a DL RS resource for a path loss (PL) measurement (e.g., $PL_{b,f,c}(q_d)$), and a maximum of four measurements may be configured per cell. Index l represents an index for a closed-loop power control process, and a maximum of two processes per cell may be configured.

Specifically, $P_O$ (eg, $P_{O\_PUCCH,b,f,c}(q_u)$) is a parameter broadcast as part of system information, and may represent a target reception power at a receiving side. The corresponding $P_O$ value may be configured in consideration of a throughput of a terminal, capacity of a cell, noise and/or interference, etc. In addition, $P_{CMAX,f,c}(i)$ may represent the configured terminal transmission power. For example, the configured terminal transmission power may be interpreted as 'configured maximum UE output power' defined in 3GPP TS 38.101-1 and/or TS 38.101-2. In addition, $M_{RB,b,f,c}^{PUCCH}(i)$ may represent a bandwidth of PUCCH resource allocation expressed by the number of resource blocks (RBs) for a PUCCH transmission occasion based on subcarrier spacing $(\mu)$. In addition, a delta function (e.g., $\Delta_{F\_PUCCH}(F)$, $\Delta_{TF,b,f,c}(i)$) may be configured in consideration of a PUCCH format (e.g., PUCCH formats 0, 1, 2, 3, 4, etc.). In addition, $g_{b,f,c}(i,l)$ related to a PUCCH power control adjustment state may be configured or indicated based on a TPC command field of DCI (e.g., DCI format 1_0, DCI format 1_1, DCI format 2_2, etc.) received or detected by a terminal.

In this case, a specific RRC parameter (e.g., PUCCH-SpatialRelationInfo, etc.) and/or a specific MAC-CE command (e.g., PUCCH spatial relation Activation/Deactivation, etc.) may be used to activate or deactivate a linkage between a PUCCH resource (PUCCH resource) and the above-described indexes q_u, q_d, and I. As an example, a PUCCH spatial relation Activation/Deactivation command in MAC-CE may activate or deactivate a linkage between a PUCCH resource and the above-described indexes q_u, q_d, and I based on the RRC parameter PUCCH-SpatialRelationInfo. In other words, the above-described indexes q_u, q_d, I, etc. may be associated with a beam, a panel, and/or a spatial domain transmission filter based on specific information. Through this, PUCCH transmission power control in units of beams, panels, and/or spatial domain transmission filters may be performed.

The above-described parameters and/or information for PUCCH power control may be individually (i.e., independently) configured for each BWP. In this case, corresponding parameters and/or information may be configured or indicated through higher layer signaling (e.g., RRC signaling, MAC-CE, etc.) and/or DCI. As an example, parameters and/or information for PUCCH power control may be transmitted through RRC signaling PUCCH-ConfigCommon, PUCCH-PowerControl, etc., and PUCCH-CopnfigCommon and PUCCH-PowerControl may be configured as shown in Table 7 below.

【Table 7】

```
PUCCH-ConfigCommon ::=        SEQUENCE {
    pucch-ResourceCommon          INTEGER (0..15)
    pucch-GroupHopping            ENUMERATED { neither, enable, disable },
    hoppingId                     INTEGER (0..1023)
    p0-nominal                    INTEGER (-202..24)
    ...
}
```

```
PUCCH-PowerControl ::=                SEQUENCE {
    deltaF-PUCCH-f0                       INTEGER {-16..15}
    deltaF-PUCCH-f1                       INTEGER {-16..15}
    deltaF-PUCCH-f2                       INTEGER {-16..15}
    deltaF-PUCCH-f3                       INTEGER {-16..15}
    deltaF-PUCCH-f4                       INTEGER {-16..15}
    p0-Set                            SEQUENCE (SIZE (1..maxNrofPUCCH-P0-PerSet}) OF P0-PUCCH
    pathlossReferenceRSs                  SEQUENCE (SIZE (1..maxNrofPUCCH-PathlossReferenceRSs})
OF PUCCH-PathlossReferenceRS
    twoPUCCH-PC-AdjustmentStates      ENUMERATED {twoStates}
    ...
}

P0-PUCCH ::=                          SEQUENCE {
    p0-PUCCH-Id                           P0-PUCCH-Id,
    p0-PUCCH-Value                        INTEGER {-16..15}
}

P0-PUCCH-Id ::=                       INTEGER (1..8}

PUCCH-PathlossReferenceRS ::=             SEQUENCE {
    pucch-PathlossReferenceRS-Id          PUCCH-PathlossReferenceRS-Id,
    referenceSignal                       CHOICE {
        ssb-Index                             SSB-Index,
        csi-RS-Index                          NZP-CSI-RS-ResourceId
    }
}
```

Through the method as described above, a terminal may determine or calculate PUCCH transmission power, and may transmit a PUCCH using the determined or calculated PUCCH transmission power.

With respect to sounding reference signal (SRS) transmission in an activated UL BWP of a carrier f of a serving cell c, a terminal may calculate a linear power value of transmission power determined by Equation 5 below. Thereafter, a terminal may control transmission power by equally dividing the calculated linear power value for antenna port(s) configured for an SRS.

Specifically, by using an SRS power control adjustment state based on index l, when a terminal performs SRS transmission in an activated UL BWP (b) of a carrier (f) of a serving cell (c), the terminal may determine SRS transmission power $P_{SRS,b,f,c}(i,q_s,l)$(dBm) at an SRS transmission occasion (i) based on Equation 5 below.

$$【Equation\ 3】$$

$$P_{SRS,b,f,c}(i,q_s,l) = \min\left\{\begin{array}{l} P_{CMAX,f,c}(i), \\ P_{O\_SRS,b,f,c}(q_s) + 10\log_{10}(2^{\mu} \cdot M_{SRS,b,f,c}(i)) + \alpha_{SRS,b,f,c}(q_s) \cdot PL_{b,f,c}(q_d) + h_{b,f,c}(i,l) \end{array}\right\}$$

In Equation 5, q_s represents an index for an open-loop power control parameter (e.g., $P_O$, $\alpha$ (alpha), a DL RS resource for a path loss (PL) measurement (e.g. $PL_{b,f,c}(q_d)$, etc.), and may be configured for each SRS resource set. Index l represents an index for a closed-loop power control process, and the corresponding index may be configured independently of a PUSCH or configured in association with a PUSCH. When SRS power control is not associated with a PUSCH, the maximum number of closed-loop power control processes for an SRS may be one.

Specifically, $P_O$ (e.g., $P_{O\_SRS,b,f,c}(q_s)$) is a parameter broadcast as part of system information, and may represent a target reception power at a receiving side. The corresponding $P_O$ value may be configured in consideration of a throughput of a terminal, capacity of a cell, noise and/or interference, etc. In addition, alpha (e.g., $\alpha_{SRS,b,f,c}(q_s)$) may represent a rate at which compensation for path loss is performed. Alpha may be configured to a value from 0 to 1, and full pathloss compensation or fractional pathloss compensation may be performed according to the configured value. In this case, the alpha value may be configured in consideration of interference between terminals and/or data rate. Also, $P_{CMAX,f,c}(i)$ may represent the configured terminal transmission power. For example, the configured terminal transmission power may be interpreted as 'configured maximum UE output power' defined in 3GPP TS 38.101-1 and/or TS 38.101-2. In addition, $M_{SRS,b,f,c}(i)$ may represent a bandwidth of SRS resource allocation expressed by the number of resource blocks (RBs) for an SRS transmission occasion based on subcarrier spacing (p) . In addition, $h_{b,f,c}(i,l)$ related to an SRS power control adjustment state may be configured or indicated based on a TPC command field of a DCI (e.g., DCI format 2_3, etc.) received or detected by a terminal and/or RRC parameter (e.g., srs-PowerControlAdjustmentStates, etc.).

A resource for SRS transmission may be applied as a reference for a base station and/or a terminal to determine a beam, a panel, and/or a spatial domain transmission filter, etc., and in consideration of this, SRS transmission power control may be performed in units of beams, panels, and/or spatial domain transmission filters.

The above-described parameters and/or information for SRS power control may be individually (i.e., independently) configured for each BWP. In this case, corresponding parameters and/or information may be configured or indicated through higher layer signaling (e.g., RRC signaling, MAC-CE, etc.) and/or DCI. As an example, parameters and/or information for SRS power control may be delivered through RRC signaling SRS-Config, SRS-TPC-CommandConfig, etc., and SRS-Config and SRS-TPC-CommandConfig may be configured as shown in Table 8 below.

【Table 8】

```
SRS-Config ::=                     SEQUENCE {
    srs-ResourceSetToReleaseList            SEQUENCE (SIZE(1..maxNrofSRS-ResourceSets)) OF SRS-
ResourceSetId
    srs-ResourceSetToAddModList             SEQUENCE (SIZE(1..maxNrofSRS-ResourceSets)) OF SRS-
ResourceSet
    srs-ResourceToReleaseList                SEQUENCE (SIZE(1..maxNrofSRS-Resources)) OF SRS-
ResourceId
    srs-ResourceToAddModList                 SEQUENCE (SIZE(1..maxNrofSRS-Resources)) OF SRS-
Resource
    tpc-Accumulation                ENUMERATED {disabled}
    ...
}

SRS-ResourceSet ::=                SEQUENCE {
    srs-ResourceSetId                 SRS-ResourceSetId,
    srs-ResourceIdList                       SEQUENCE (SIZE(1..maxNrofSRS-ResourcesPerSet)) OF
SRS-ResourceId
    resourceType                      CHOICE {
        aperiodic                         SEQUENCE {
            aperiodicSRS-ResourceTrigger              INTEGER (1..maxNrofSRS-TriggerStates-1),
            csi-RS                            NZP-CSI-RS-ResourceId
            slotOffset                        INTEGER (1..32)
            ...,
            [[
            aperiodicSRS-ResourceTriggerList-v1530              SEQUENCE   (SIZE(1..maxNrofSRS-
TriggerStates-2))
                                                    OF INTEGER (1..maxNrofSRS-TriggerStates-1)
            ]]
        },
        semi-persistent                   SEQUENCE {
```

```
         associatedCSI-RS                    NZP-CSI-RS-ResourceId
         ...
     },
     periodic                        SEQUENCE {
         associatedCSI-RS                    NZP-CSI-RS-ResourceId
         ...
     }
   },
   usage                           ENUMERATED {beamManagement,  codebook,  nonCodebook,
antennaSwitching},
   alpha                           Alpha
   p0                              INTEGER (-202..24)
   pathlossReferenceRS             CHOICE {
     ssb-Index                       SSB-Index,
     csi-RS-Index                    NZP-CSI-RS-ResourceId
   }
   srs-PowerControlAdjustmentStates   ENUMERATED { sameAsFci2, separateClosedLoop}
   ...
 }


SRS-TPC-CommandConfig ::=          SEQUENCE {
   startingBitOfFormat2-3            INTEGER (1..31)
   fieldTypeFormat2-3                INTEGER (0..1)
   ...,
   [[
   startingBitOfFormat2-3SUL-v1530   INTEGER (1..31)
   ]]
 }
```

Through the method as described above, a terminal may determine or calculate SRS transmission power, and may transmit an SRS using the determined or calculated SRS transmission power.

When a terminal performs PRACH transmission in an activated UL BWP (b) of a carrier (f) of a serving cell (c), a terminal may determine PRACH transmit power $P_{PRACH,b,f,c}(i)$ (dBm) in a PRACH transmission occasion (i) based on Equation 6 below.

【Equation 6】

$$P_{\mathrm{PRACH},b,f,c}(i) = \min\left\{P_{\mathrm{CMAX},f,c}(i), P_{\mathrm{PRACH,target},f,c} + PL_{b,f,c}\right\}$$

In Equation 6, $P_{CMAX,f,c}(i)$ may represent the configured terminal transmission power. For example, the configured terminal transmission power may be interpreted as 'configured maximum UE output power' defined in 3GPP TS 38.101-1 and/or TS 38.101-2. In addition, $P_{PRACH,target,f,c}$ represents PRACH target reception power provided through higher layer signaling (e.g., RRC signaling, MAC-CE, etc.) for an activated UL BWP. In addition, $PL_{b,f,c}$ represents a path loss for an activated UL BWP, and may be determined based on a DL RS associated with PRACH transmission in an activated DL BWP of a serving cell (c). As an example, a terminal may determine a path loss related to PRACH transmission based on a synchronization signal (SS)/physical broadcast channel (PBCH) block associated with PRACH transmission.

The above-described parameters and/or information for PRACH power control may be individually (i.e., independently) configured for each BWP. In this case, corresponding parameters and/or information may be configured or indicated through higher layer signaling (e.g., RRC signaling, MAC-CE, etc.). As an example, parameters and/or information for PRACH power control may be transmitted through RRC signaling RACH-ConfigGeneric, etc., and RACH-ConfigGeneric may be configured as shown in Table 9 below.

【Table 9】

```
RACH-ConfigGeneric ::=              SEQUENCE {
     prach-ConfigurationIndex            INTEGER (0..255),
     msg1-FDM                            ENUMERATED {one, two, four, eight},
     msg1-FrequencyStart                     INTEGER (0..maxNrofPhysicalResourceBlocks-1),
```

```
     zeroCorrelationZoneConfig           INTEGER(0..15),
     preambleReceivedTargetPower          INTEGER (-202..-60),
     preambleTransMax                    ENUMERATED {n3, n4, n5, n6, n7, n8, n10, n20, n50, n100,
n200},
     powerRampingStep                    ENUMERATED {dB0, dB2, dB4, dB6},
     ra-ResponseWindow                   ENUMERATED {sl1, sl2, sl4, sl8, sl10, sl20, sl40, sl80},
     ...
   }
```

Through the method as described above, a terminal may determine or calculate PRACH transmission power, and may transmit a PRACH using the determined or calculated PRACH transmission power.

Multi Panel Operations

'A Panel' referred to in the present disclosure may be interpreted/applied as 'a plurality of (or at least one) panels' or 'a panel group' (having similarity/a common value with regard to a specific characteristic (e.g., timing advance (TA), a power control parameter, etc.)). Alternatively, 'a panel' referred to in the present disclosure may be interpreted/applied as 'a plurality of (or at least one) antenna ports' or 'a plurality of (or at least one) uplink resources' or 'an antenna port group' or 'an uplink resource group (or set))' (having similarity/a common value with regard to a specific characteristic (e.g., TA, a power control parameter, etc.)). Alternatively, 'a panel' referred to in the present disclosure may be interpreted/applied as 'a plurality of (or at least one) beams' or 'at least one beam group (or set)' (having similarity/a common value with regard to a specific characteristic (e.g., TA, a power control parameter, etc.)). Alternatively, 'a panel' referred to in the present disclosure may be defined as a unit for a terminal to configure a transmission/reception beam. For example, 'a transmission panel' may be defined as a unit which may generate a plurality of candidate transmission beams in one panel, but may use only one beam of them in transmission at a specific time. In other words, only one transmission beam (spatial relation information RS) may be used per Tx panel to transmit a specific uplink signal/channel. In addition, 'a panel' in the present disclosure may refer to 'a plurality of (or at least one) antenna ports' or 'an antenna port group' or 'an uplink resource group (or set)' with common/similar uplink synchronization and may be interpreted/applied as an expression which is generalized as 'an uplink synchronization unit (USU)'. In addition, 'a panel' in the present disclosure may be interpreted/applied as an expression which is generalized as 'an uplink transmission entity (UTE)'.

In addition, the 'uplink resource (or resource group)' may be interpreted/applied as a PUSCH/PUCCH/SRS/PRACH resource (or resource group (or set)). In addition, the interpretation/application may be interpreted/applied conversely. In addition, 'an antenna (or an antenna port)' may represent a physical or logical antenna (or antenna port) in the present disclosure.

In other words, 'a panel' referred to in the present disclosure may be variously interpreted as 'a terminal antenna element group', 'a terminal antenna port group', 'a terminal logical antenna group', etc. In addition, for which physical/logical antennas or antenna ports will be combined and mapped to one panel, a variety of schemes may be considered by considering a position/a distance/a correlation between antennas, a RF configuration, and/or an antenna (port) virtualization scheme, etc. Such a mapping process may be different according to terminal implementation. In addition, 'a panel' referred to in the present disclosure may be interpreted/applied as 'a plurality of panels' or 'a panel group' (having similarity with regard to a specific characteristic).

Hereinafter, multi panel structures will be described.

For terminal implementation in a high-frequency band, modeling terminal equipped with a plurality of panels (e.g., configured with one or a plurality of antennas) is considered (e.g., 2 bi-directional panels in 3GPP UE antenna modeling). A variety of forms may be considered for such implementation of a plurality of panels of a terminal. The after-described contents are based on a terminal which supports a plurality of panels, but they may be extended and applied to a base station which supports a plurality of panels (e.g., TRP). The after-described contents related to multi panel structures may be applied to transmission and reception of a signal and/or a channel considering multi panels described in the present disclosure.

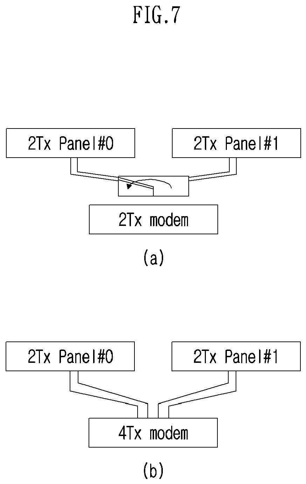

FIG. 7 is a diagram illustrating a multi panel UE in a wireless communication system to which the present disclosure may be applied.

FIG. 7(a) illustrates implementation of RF (radio frequency) switch-based multi panel terminals and FIG. 7(b) illustrates implementation of RF connection-based multi panel terminals.

For example, it may be implemented based on RF switch as in FIG. 7(a). In this case, only one panel is activated for a moment, and it may be impossible to transmit a signal for a certain duration of time to change an activated panel (i.e., panel switching).

For implementation of a plurality of panels in a different way, a RF chain may be connected respectively so that each panel can be activated anytime as in FIG. 7(b). In this case, time for panel switching may be 0 or too little. And, it may be possible to simultaneously transmit a signal by activating a plurality of panels at the same time (STxMP: simultaneous transmission across multi-panel) according to a modem and power amplifier configuration.

For a terminal having a plurality of panels, a radio channel state may be different per panel, and in addition, a RF/antenna configuration may be different per panel, so a method in which a channel is estimated per panel is needed. In particular, a process in which one or a plurality of SRS resources are transmitted respectively per panel is needed to measure uplink quality or manage an uplink beam, or to measure downlink quality per panel or manage a downlink beam by utilizing channel reciprocity. Here, a plurality of SRS resources may be SRS resources which are transmitted by a different beam in one panel or may be SRS resources which are repeatedly transmitted by the same beam. Hereinafter, for convenience, a set of SRS resources transmitted in the same panel (a specific usage parameter (e.g., beam management, antenna switching, a codebook-based PUSCH, a non-codebook based PUSCH) and a specific time domain behavior (e.g., aperiodic, semi-persistent, or periodic)) may be referred to as a SRS resource group. For this SRS resource group, a SRS resource set configuration supported in a Rel-15 NR system may be utilized as it is or it may be configured separately by bundling one or a plurality of SRS resources (having the same time domain behavior and usage).

For reference, only when usage is beam management for the same usage and time domain behavior in Rel-15, a plurality of SRS resource sets may be configured. In addition, it is defined so that simultaneous transmission cannot be performed between SRS resources configured in the same SRS resource set, but simultaneous transmission can be performed between SRS resources belonging to a different SRS resource set. Accordingly, if panel implementation and simultaneous transmission of a plurality of panels as in FIG. 7(b) are considered, a corresponding concept (a SRS resource set) itself may be matched to a SRS resource group. But, a SRS resource group may be separately defined if even implementation (panel switching) as in FIG. 7(a) is considered. In an example, a configuration may be given by giving a specific ID to each SRS resource so that resources with the same ID belong to the same SRS resource group and resources with a different ID belong to a different resource group.

For example, it is assumed that four SRS resource sets (RRC parameter usage is set to 'BeamManagement') configured for BM usage are configured for a terminal. Hereinafter, for convenience, each is referred to as SRS resource set A, B, C, D. In addition, consider a situation in which a terminal implements a total of 4 (Tx) Panels and applies an implementation in which each set corresponds to one (Tx) panel to perform SRS transmission.

[Table 10]

| The maximum number of SRS resource sets across all time domain behaviors (periodic/semi-persistent/aperiodic) reported in 2-30 | Additional limit to the maximum number of the maximum SRS resource sets per supported time domain behavior (periodic/semi-persistent/aperiodic) |
|---|---|
| 1 | 1 |
| 2 | 1 |
| 3 | 1 |
| 4 | 2 |
| 5 | 2 |
| 6 | 2 |
| 7 | 4 |
| 8 | 4 |

In Rel-15 standards, such UE implementation is more clearly supported by the following agreement. In other words, for UE which performs capability reporting for a value reported in feature group (FG) 2-30 as 7 or 8 in Table 10, a total of up to 4 SRS resource sets for BM (per supported time domain behavior) may be configured as in the right column of Table 10. As above, implementation which performs transmission by corresponding one UE panel to each set may be applied.

In this case, when 4 panel UE corresponds each panel to one SRS resource set for BM and transmits it, the number itself of configurable SRS resources per each set is also supported by separate UE capability signaling. For example, it is assumed that 2 SRS resources are configured in the each set. It may correspond to 'the number of UL beams' which can be transmitted per each panel. In other words, the UE may respectively correspond 2 UL beams to 2 configured SRS resources per each panel and transmit them, when 4 panels are implemented. In this situation, according to Rel-15 standards, one of a codebook(CB)-based UL or non-codebook(NCB)-based UL mode may be configured for final UL PUSCH transmission scheduling. In any case, only one SRS resource set (having usage set as "CB-based UL" or "NCB-based UL") configuration, i.e., only one dedicated SRS resource set (for a PUSCH) configuration, is supported in Rel-15 standards.

Hereinafter, multi panel UE (MPUE) categories will be described.

Regarding the above-described multi panel operations, the following 3 MPUE categories may be considered. Specifically, 3 MPUE categories may be classified according to i) whether multiple panels may be activated and/or ii) transmission using multiple panels may be possible.

MPUE category 1: In a terminal that multiple panels are implemented, only one panel may be activated at a time. A delay for panel switching/activation may be configured as [X]ms. In an example, the delay may be configured to be longer than a delay for beam switching/activation and may be configured in a unit of a symbol or in a unit of a slot. MPUE category 1 may correspond to MPUE-assumption1 described in standardization-related documents (e.g., a 3gpp agreement, a technical report(TR) document and/or a technical specification(TS) document, etc.).

MPUE category 2: In a terminal that multiple panels are implemented, multiple panels may be activated at a time. One or more panels may be used for transmission. In other words, simultaneous transmission using panels may be performed in a corresponding category. MPUE category 2 may correspond to MPUE-assumption2 described in standardization-related documents (e.g., a 3gpp agreement, a TR document and/or a TS document, etc.).

MPUE category 3: In a terminal that multiple panels are implemented, multiple panels may be activated at a time, but only one panel may be used for transmission. MPUE category 3 may correspond to MPUE-assumption3 described in standardization-related documents (e.g., a 3gpp agreement, a TR document and/or a TS document, etc.).

Regarding multi panel-based signal and/or channel transmission and reception suggested in the present disclosure, at least one of the above-described 3 MPUE categories may be supported. In an example, in Rel-16, MPUE category 3 of the following 3 MPUE categories may be (selectively) supported.

In addition, information on a MPUE category may be predefined in specifications (i.e., standards). Alternatively, information on a MPUE category may be configured semi-statically and/or may be indicated dynamically according to a system situation (i.e., a network aspect, a terminal aspect). In this case, a configuration/an indication, etc. related to multi panel-based signal and/or channel transmission and reception may be configured/indicated by considering a MPUE category.

Hereinafter, a configuration/an indication related to panel-specific transmission/reception will be described.

Regarding a multi panel-based operation, signal and/or channel transmission and reception may be performed in a panel-specific way. Here, being panel-specific may mean that signal and/or channel transmission and reception in a unit of a panel may be performed. Panel-specific transmission and reception may be referred to as panel-selective transmission and reception.

Regarding panel-specific transmission and reception in a multi panel-based operation suggested in the present disclosure, a method of using identification information (e.g., an identifier(ID), an indicator, etc.) for configuring and/or indicating a panel which will be used for transmission and reception among one or more panels may be considered.

In an example, an ID for a panel may be used for panel-selective transmission of a PUSCH, a PUCCH, a SRS, and/or a PRACH among activated multiple panels. The ID may be configured/defined based on at least any one of the following 4 methods (options (Alts) 1, 2, 3, 4).

Alt.1 : An ID for a panel may be a SRS resource set ID.

In an example, it may be desirable to correspond each UE Tx panel to a SRS resource set configured with regard to terminal implementation when considering a) an aspect that SRS resources of multiple SRS resource sets having the same time domain behavior are simultaneously transmitted in the same BWP, b) an aspect that a power control parameter is configured in a unit of a SRS resource set, c) an aspect that a terminal may report as up to 4 SRS resource sets (they may correspond to up to 4 panels) according to a supported time domain behavior. In addition, an Alt.1 scheme has an advantage that a SRS resource set related to each panel may be used for 'codebook' and 'non-codebook'-based PUSCH transmission. In addition, for an Alt.1 scheme, multiple SRS resources belonging to multiple SRS resource sets may be selected by extending a SRI(SRS resource indicator) field of DCI. In addition, a mapping table of an SRI to an SRS resource may need to be extended to include SRS resources in the whole SRS resource set.

ii) Alt.2 : An ID for a panel may be an ID which is (directly) associated with a reference RS resource and/or a reference RS resource set.

iii) Alt.3 : An ID for a panel may be an ID which is directly associated with a target RS resource (a reference RS resource) and/or a reference RS resource set.

An Alt.3 scheme has an advantage that configured SRS resource set(s) corresponding to one UE Tx panel may be controlled more easily and that the same panel identifier may be allocated to multiple SRS resource sets having a different time domain behavior.

iv) Alt.4 : An ID for a panel may be an ID which is additionally configured to spatial relation information (e.g., RRC_SpatialRelationInfo).

An Alt.4 scheme may be a scheme which newly adds information for representing an ID for a panel. In this case, it has an advantage that configured SRS resource sets corresponding to one UE Tx panel may be controlled more easily and that the same panel identifier may be allocated to multiple SRS resource sets having a different time domain behavior.

In an example, a method of introducing an UL TCI similarly to the existing DL TCI (Transmission Configuration Indication) may be considered. Specifically, definition of a UL TCI state may include a list of reference RS resources (e.g., a SRS, a CSI-RS and/or an SSB). A current SRI field may be reused to select a UL TCI state from a configured set or a new DCI field of DCI format 0_1 (e.g., a UL-TCI field) may be defined for a corresponding purpose.

Information related to the above-described panel-specific transmission and reception (e.g., a panel ID, etc.) may be transmitted by higher layer signaling (e.g., a RRC message, MAC-CE, etc.) and/or lower layer signaling (e.g., layer1 (L1) signaling, DCI, etc.). Corresponding information may be transmitted from a base station to a terminal or may be transmitted from a terminal to a base station according to a situation or if necessary.

In addition, corresponding information may be configured by a hierarchical method which configures a set for a candidate group and indicates specific information.

In addition, the above-described identification information related to panel may be configured in a unit of a single panel or in a unit of multiple panels (e.g., a panel group, a panel set).

<u>Method for configuring a pathloss (PL) reference signal (RS)</u>

In the present disclosure, '/' may be interpreted as 'and', 'or', or 'and/or' depending on the context. In addition, a reference signal (RS) referred to in the present disclosure is a term that includes not only various types of RSs specified in the standard, but also physical layer signals/channels such as a synchronization signal and/or a PBCH/SS block.

In NR MIMO Rel-15, a base station may configure a DL RS (i.e., PL RS (pathloss RS)) as an open loop power control parameter for pathloss compensation in a UL channel/RS (e.g., PUSCH, PUCCH, SRS) of a UE. For example, for PUCCH, a base station can change/update the pathloss RS (PL RS) by changing/updating PUCCH spatial relationship information (identifier) (higher layer parameter PUCCH-SpatialRelationInfoId) through a MAC-CE message for each PUCCH resource. In the case of a PL RS update for a specific UL channel/RS in Rel-16, for each channel/RS (e.g., PUCCH resource identifier (PUCCH resource ID), SRS resource set identifier (SRS resource set ID), SRI identifier (SRI ID), etc.), a PUCCH spatial relation information identifier (spatial relation info ID) or a pathloss RS identifier (pathloss RS ID) may be updated through a single MAC-CE. In this operation, the number of PL RSs that can be simultaneously tracked by a UE can be configured up to 4 according to UE capabilities.

To change a PL RS more dynamically in Rel-16 NR MIMO, operations for activating/deactivating/updating a PL RS for a PUSCH and an SRS based on individual MAC-CEs have been introduced. In addition, standardization has been carried out to increase the number of PL RS pools from 8 to 64, which can be configured by RRC.

i) Determining whether to support update of a PL RS (path loss reference RS) for power control for a PUSCH and an SRS through a MAC-CE

- It is necessary to agree on a condition of whether a RS for PL (path loss) follows a downlink RS in spatial relation.
- When a spatial relation of an AP-SRS (aperiodic-SPS) for a CB (codebook) / a NCB (non-codebook) UL is activated by a MAC-CE, it is necessary to agree whether UL power control parameters for a PUSCH can be activated through a MAC-CE.

ii) Discussion has been made to support an update of PL RSs (pathloss RSs) for power control for a PUSCH and an SRS through a MAC CE, and the following candidates are included.

- Option 1: For codebook-based PUSCH transmission, if a PL RS is not configured and a periodic DL RS is configured in a spatial relation, a PL RS follows a DL RS in a spatial relation associated with an SRS Resource Indicator (SRI) indicated in scheduling DCI.
- Option 2: A PL RS may be configured/associated with a DL RS in spatial relation information. A base station can configure more than 4 PL RSs.

- Option 3: PL RSs for at least of an SRS or a PUSCH may be explicitly activated/updated by a MAC CE. Other power control parameters including P0, alpha and a closed loop process index can also be activated by a MAC-CE. A MAC-CE is an activation MAC CE for an aperiodic SRS/semi-persistent SRS.
- Option 4: A transmission configuration indicator (TCI) state update for a periodic CSI-RS by a MAC CE is supported. A periodic CSI-RS is used for a PL RS.
- Option 5: A semi-persistent CSI-RS is supported for a PL RS.

iii) When a PL RS is updated by a MAC CE, whether/how the existing mechanism for higher layer filtered RSRP is modified for pathloss measurement is selected from the following alternatives.

- Alternative 1: When a PL RS is updated by a MAC CE, layer 1 (L1)-RSRP based pathloss measurement is applied.
- Alternative 2: By defining applicable timing after a MAC CE, higher layer filtered RSRP for pathloss measurement is reused. Before higher layer filtered RSRP is applied, a UE uses L1-RSRP for pathloss estimation.
- Alternative 3: By defining applicable timing after a MAC CE, higher layer filtered RSRP for pathloss measurement is reused. The filtered RSRP value for the previous PL RS is used before the application time.
- Alternative 4: Higher layer filtered RSRP for pathloss measurement is reused with the same operation of higher layer filtered RSRP in Rel-15. It is expected that a UE tracks all of the RRC configured candidate PL RSs. The maximum configurable PL RSs by RRC depend on UE capability.
- The standard within Rel-16 allows only 4 as the maximum number of configurable PL RSs by RRC. In the case of X or less candidate PL RSs configured by RRC, the existing mechanism for higher layer filtered RSRP for pathloss measurement may be reused. A baseline is X=4. A PL RS selected by a MAC CE is one of X RRC configured candidate PL RSs. In alternatives 1, 2, 3, and 4, the maximum configurable PL RSs by RRC are increased from Rel-15 (e.g., 8, 16, or 64). For alternatives 1, 2, and 3, these PL RSs are used only for setup purposes.

iv) A pathloss reference RS for a PUSCH may be activated/updated through a MAC CE.

- A MAC CE message may activate/update a value of a PUSCH-pathloss reference RS identifier (i.e., higher layer parameter PUSCH-PathlossReferenceRS-Id) corresponding to an SRI-PUSCH power control identifier (i.e., higher layer parameter sri-PUSCH-PowerControlId) (which is used as a codepoint in an SRI field of DCI). Here, a mapping that is a linkage between sri-PUSCH-PowerControlId and PUSCH-PathlossReferenceRS-Id is given by SRI-PUSCH power control (i.e., higher layer parameter SRI-PUSCH-PowerControl) .
- By defining applicable timing after a MAC CE, higher layer filtered RSRP for pathloss measurement is reused.

A filtered RSRP value for the previous pathloss RS is used before an application time, which is the next slot after the 5th measurement sample, here, the first measurement sample corresponds to the first instance of 3 ms after transmitting an acknowledgment (ACK) for a MAC CE.

This applies only to a UE that support the number of RRC-configurable pathloss RS(s) greater than 4, and this applies only when a PL RS activated by a MAC CE is not tracked.

A UE is required to track activated PL RS(s) only if PL RSs established by RRC are greater than 4.

It is up to a UE whether to update a filtered RSRP value for a PL RS before 3 ms after transmitting an ACK for a MAC CE.

v) A pathloss reference RS for an AP-SRS (aperiodic SPS)/SP-SR (semi-persistent SRS) may be activated/updated through a MAC CE.

- A UE may be configured with multiple pathloss RSs by RRC, and one of them may be activated/updated through a MAC CE for an SRS resource set.
- By defining applicable timing after a MAC CE, higher layer filtered RSRP for pathloss measurement is reused.

A filtered RSRP value for the previous pathloss RS is used before an application time, which is the next slot after the 5th measurement sample, here, the first measurement sample corresponds to the first instance of 3 ms after transmitting an acknowledgment (ACK) for a MAC CE.

This applies only to a UE that support the number of RRC-configurable pathloss RS(s) greater than 4, and this applies only when a PL RS activated by a MAC CE is not tracked.

A UE is required to track activated PL RS(s) only if PL RSs established by RRC are greater than 4.

It is up to a UE whether to update a filtered RSRP value for a PL RS before 3 ms after transmitting an ACK for a MAC CE.

vi) In power control of a PUSCH, a PUCCH, and an SRS, the total number of maximum configurable pathloss RSs by RRC is 64, including those supported by Rel-15.

These pathloss reference signals are only for configuration purposes, and a UE is still required to track up to 4 pathloss RSs for PUSCH, PUCCH and SRS transmission.

Here, "up to 4 pathloss RSs" applies to the total number of pathloss RSs for a PUSCH, a PUCCH, and an SRS.

vii) In the feature of pathloss RS update for a PUSCH/SRS based on a MAC CE in Rel-16,

- Introduce a new RRC parameter that enables the feature of pathloss RS update for a PUSCH/SRS based on a new MAC CE. That is, enable PL RS update for a PUSCH SRS (enablePLRSupdateForPUSCHSRS)

viii) When PL RS update enable (enablePLRSupdateForPUSCHSRS) for a PUSCH SRS is configured, if grant-based or grant-free PUSCH transmission is scheduled/activated by DCI format 0_1 not including an SRI field, an RS resource index $q_d$ corresponding to a PUSCH-pathloss reference RS identifier (i.e. higher layer parameter PUSCH-PathlossReferenceRS-Id) mapped to SRI-PUSCH power control identifier (i.e. higher layer parameter sri-PUSCH-PowerControlId) = 0 is used for path-loss measurement of PUSCH transmission. In this case, a UE expects to be configured with SRI-PUSCH power control (sri-PUSCH-PowerControl).

ix) An application timing for newly activated PL RSs is the next slot of 2 ms after the Nth measurement sample, here, the first measurement sample corresponds to the first instance of 3 ms after transmitting an ACK for a MAC CE.

Here, an N value may be discussed, and the N is fixed to 5 if there is no agreement on an introduction of a UE capability for the N value.

An application timing applies to a PUSCH, an AP/SP-SRS and a PUCCH.

x) A pathloss reference RS for a PUSCH may be activated/updated through a MAC CE.

- A MAC CE message may activate/update a value of a PUSCH-pathloss reference RS identifier (i.e., higher layer parameter PUSCH-PathlossReferenceRS-Id) corresponding to an SRI-PUSCH power control identifier (i.e., higher layer parameter sri-PUSCH-PowerControlId) (which is used as a codepoint in an SRI field of DCI).
- By defining applicable timing after a MAC CE, higher layer filtered RSRP for pathloss measurement is reused.

A filtered RSRP value for the previous pathloss RS is used before an application time, which is the next slot of 2ms after the N-th measurement sample, here, the first measurement sample corresponds to the first instance of 3 ms after transmitting an acknowledgment (ACK) for a MAC CE.

This applies only to a UE that support the number of RRC-configurable pathloss RS(s) greater than 4, and this applies only when a PL RS activated by a MAC CE is not tracked.

A UE is required to track activated PL RS(s) only if PL RSs established by RRC are greater than 4.

It is up to a UE whether to update a filtered RSRP value for a PL RS before 3 ms after transmitting an ACK for a MAC CE.

An N value may be discussed, and the N is fixed to 5 if there is no agreement on an introduction of a UE capability for the N value.

xi) A pathloss reference RS for an AP-SRS (aperiodic SPS)/SP-SR (semi-persistent SRS) may be activated/updated through a MAC CE.

- A UE may be configured with multiple pathloss RSs by RRC, and one of them may be activated/updated through a MAC CE for an SRS resource set.
- By defining applicable timing after a MAC CE, higher layer filtered RSRP for pathloss measurement is reused.

A filtered RSRP value for the previous pathloss RS is used before an application time, which is the next slot of 2ms after the N-th measurement sample, here, the first measurement sample corresponds to the first instance of 3 ms after transmitting an acknowledgment (ACK) for a MAC CE.

This applies only to a UE that support the number of RRC-configurable pathloss RS(s) greater than 4, and this applies only when a PL RS activated by a MAC CE is not tracked.

A UE is required to track activated PL RS(s) only if PL RSs established by RRC are greater than 4.

It is up to a UE whether to update a filtered RSRP value for a PL RS before 3 ms after transmitting an ACK for a MAC CE.

An N value may be discussed, and the N is fixed to 5 if there is no agreement on an introduction of a UE capability for the N value.

xii) If the number of RRC-configured PL RSs for pathloss estimation for a PUCCH, a PUSCH, and an SRS is greater than 4, a UE is not required to track RSs not activated by a MAC-CE.

xiii) If MAC-CE based PL RS activation/update is not enabled, a UE is not expected to be configured with 4 or more PL RSs.

In the PL RS-related operation, the number of PL RSs that can be simultaneously tracked by a UE is up to 4. If an SRS for positioning is configured, up to 16 additional PL RSs may be additionally configured according to a UE capability (i.e., up to 20 PL RSs may be configured when a positioning SRS is configured). Here, in the general case, when the number of PL RSs configured by RRC exceeds 4, standardization has been performed so that a UE tracks only activated PL RSs. Below is the related TS 38.213 content.

Uplink power control determines power for PUSCH, PUCCH, SRS, and PRACH transmissions.

Exceptionally, except for SRS transmission configured by an SRS positioning resource set (e.g., SRS-PosResourceSet-r16), a UE is not expected to simultaneously maintain more than 4 pathloss estimates per serving cell for all PUSCH/PUCCH/SRS transmissions. If a UE is provided with the number of RS resources for pathloss estimation for 4 or more PUSCH/PUCCH/SRS transmissions, the UE maintains pathloss estimation RS resources corresponding to RS resource indices $q_d$. If an RS resource updated by a MAC CE is one of RS resources maintained by a UE for pathloss estimation for PUSCH/PUCCH/SRS transmission, the UE applies pathloss estimation based on the RS resources from the first slot after slot $k+3 \cdot N_{slot}^{subframe,\mu}$. Here, $k$ is a slot in which a UE transmits a PUCCH or a PUSCH for HARQ-ACK information for a PDSCH providing a MAC CE. $\mu$ is each subcarrier spacing (SCS) configuration for a PUCCH or a PUSCH.

In terms of current standardization, a multi-panel UE are not considered for spatial relation and a PL RS. As described above, when the number of PL RSs configured by RRC exceeds 4, a UE tracks PL RS(s) activated by a MAC-CE. Here, when considering a multi-panel UE, it is necessary to distinguish between a case in which a plurality of DL panels are activated and a case in which a single DL panel is activated. Here, 'activation of a panel' means that the panel is ready for transmission and reception. A certain amount of time may be required (for power supply and stabilization of corresponding panel hardware, etc.) in order for a panel in an inactive state to be changed to an active state. First, when a single DL panel is activated, a PL RS tracking operation method similar to the existing one can be applied based on a panel-common or panel-specific PL RS pool. On the other hand, since the dominant path for a DL RS for each panel from a base station may be different depending on directionality and geometry of each panel when multiple DL panels are activated, power control and PL RS tracking considering this are required. In this case, a method of maintaining the number of PL RSs that can be tracked by a UE at 4 or extending the number of PL RSs that can be tracked by a UE according to the number of panels of the UE can be considered. Accordingly, a specific operation method for configuring a PL RS and tracking the number of PL RSs is required. Therefore, the present disclosure proposes a PL RS configuration method for a multi-panel UE and a method for adjusting the number of tracking PL RSs accordingly.

Hereinafter, in the present disclosure, tracking a pathloss reference signal (PL RS) means receiving a PL RS from a base station and estimating/measuring a pathloss value using it.

First, all or part of the following information may be reported from a UE to a base station for a PL RS configuration and the number of tracking PL RSs of the multi-panel UE. For example, all or part of the following information may be included in a UE capability and reported. Based on this, the specific details of the proposed methods will be described later.

- UE capability configuration

#1) Number of UE panels (i.e., N_panel) (e.g., 'supportedNumberPanels')

#2) Maximum number of panels of simultaneously activated UE panels (for pathloss measurement/tracking, e.g., 'N_act')

#3) Maximum number of tracking PL RSs per panel

#4) Maximum number of tracking PL RSs per UE

For example, if a multi-panel UE reports {#1, #2, #3, #4} = {3, 2, 4, 6} to a base station as a capability, while the UE has 3 panels, up to 2 panels can be activated simultaneously, up to 4 PL RSs can be tracked for each panel, and a UE can track up to 6 PL RSs.

Embodiment 1: For a multi-panel UE, the number of PL RSs that the UE can track may be configured/limited to 4 or less per panel. To this end, one or more of the following methods are applied. That is, any one of the methods proposed below may be used independently, or a plurality of methods may be used together.

Embodiment 1-1: A UE may not expect that the number of PL RSs tracked per panel exceeds N1 (N1 is a natural number). That is, the number of PL RSs (i.e., activated PL RSs) tracked per panel of a UE can be configured up to N1.

Here, for example, Embodiment 1-1 can be applied when a base station recognizes information on activated panel(s) of a UE.

In addition, for example, i) the N1 value may be predefined as a specific constant value (e.g., 4 or less). Alternatively, ii) the N1 value may be a value configured by a base station (e.g., a base station configures a specific value to a UE within a range where the number of PL RSs tracked per panel does not exceed N1). Alternatively, iii) the N1 value may be a value (e.g., the UE capability #3) reported by a UE (as the UE capability). For example, when a base station configures a specific value (i.e., the number of PL RSs tracked per panel) to a UE, the UE may configure the specific value based on a value reported as a UE capability.

Embodiment 1-2: A UE may not expect that the total number of PL RSs tracked exceeds N2 (N2 is a natural number), where N2 may increase according to the number of (activated) panels. That is, the number of all PL RSs (i.e., activated PL RSs) tracked by a UE may be configured up to N2.

Here, for example, Embodiment 1-2 can be applied when a base station does not recognize index(s) of the activated panel(s)/the number of activated panel(s) of a UE.

In addition, for example, i) the N2 value may be predefined as a specific constant value (e.g., 4 or more). Alternatively, ii) the N2 value may be a value configured by a base station. Alternatively, iii) the N2 value may be a value reported by a UE (as UE capability) (e.g., the maximum number of trackable PL RSs per panel (e.g., the UE capability #3) $\times$ the number of (active) panels (e.g., the UE capability #2)).

For example, the N2 value may be a value defined or configured according to the number of (activated) panels in a form of a mapping table. Here, as the number of panels increases by 1, the number of added PL RSs may be the same or the number of added PL RSs may decrease. If a plurality of tables are defined, a UE may report which table is supported (as UE capability) to a base station.

For example, when the number of (activated) panels is 1 (#panels=1), N2 = 4. If the number of (active) panels is 2 (#panels=2), N2 = 7. If the number of (active) panels is 3 (#panels=3), N2 = 9. Here, when the number of (active) panels increases from 1 to 2, the increment (delta) of the N2 value is 3, and when the number of (active) panels is increased from 2 to 3, the increment (delta) of the N2 value is 2. That is, as the number of (activated) panels increases, the increment of the N2 value may decrease.

In addition, in the above method, an increment of the N2 value in a specific duration(s) (i.e., when the number of (activated) panels increases by 1, each duration is defined as a specific duration) may be zero. In the above example, when the number of (activated) panels is 3 (#panels=3) and 4 (#panels=4), N2 = 9 may be both. That is, when the number of (active) panels increases from 3 to 4, an increment (delta) of N2 value is 0.

Embodiment 1-3: A UE may not expect that the total number of tracked PL RSs exceeds N3 (N3 is a natural number) . Here, N3 can be defined/configured/applied regardless of the number of (activated) panels.

Here, for example, Embodiments 1-3 may be applied when a base station does not recognize index(s) of the activated panel(s)/the number of activated panel(s) of a UE.

In addition, for example, i) the N3 value may be predefined as a specific constant value (e.g., 4 or more). Alternatively, ii) the N3 value may be a value configured by a base station. Alternatively, iii) the N3 value may be a value (e.g., the UE capability #4) reported by a UE (as the UE capability).

One of the proposed methods (e.g., Embodiment 1-1/1-2/1-3) may be applied independently, or a plurality of methods may be applied together (e.g., Embodiment 1-1 + Embodiment 1-3). In this case, which of the above methods (e.g., Embodiment 1-1/1-2/1-3) is applied may be configured by a base station (e.g., by RRC, MAC CE, etc.).

Here, a base station may indicate/configure whether to perform PL RS tracking in each panel to a terminal.

In the above methods, when a panel identifier (ID) is not explicitly revealed, a target UL channel/RS and a panel ID may be mapped based on a specific UL channel/RS configuration (e.g., SRS resource set ID/PUCCH group ID, etc.).

Embodiment 1-1 is a method of extending a limit of the maximum number of PL RSs that can be tracked by a UE to 4 to a specific number N1 (e.g., N1=4) per panel. When this method is applied, an operation may be possible when a UE reports the number of panels (i.e., N_panel) of a UE in the UE capability to a base station. Here, in a state where all or part of multiple panels of a UE are activated, when a base station knows information on (the number of) the activated panels of the UE through specific signaling or prior information (and when a PL RS for each panel can be configured/indicated separately), a UE may operate without expecting that the number of tracking PL RSs per panel exceeds N1. Here, activation of all or part of a plurality of panels of a UE may mean activation of reception or transmission panel(s) in terms of DL transmission or UL transmission or may mean activation by including panel(s) for both transmission and reception.

Alternatively, for example, if a base station does not know information on the activated DL panel (index and/or number) of a UE (and/or if a PL RS for each panel cannot be configured/indicated separately), the UE may operate without expecting that the total number of tracking PL RSs exceeds N2 (e.g., Embodiment 1-2 or Embodiment 1-3).

Here, the N2 value according to the above Embodiment 1-2 may be a value associated with the number of (activated) panels, and for example, may be defined as N2 = 4 * N_act (the maximum number of panels that can be activated simultaneously). That is, the total number of tracking PL RS may be adjusted based on a UE capability and/or the number of (activated) panels. Here, the N2 value may have a feature in which the number of tracking PL RSs linearly or non-linearly increases according to the number of (activated) panels.

For example, the N2 value may be a value defined or configured according to the number of (activated) panels in a form of a mapping table. Here, as the number of panels increases by 1, the number of added PL RSs may be the same or as the number of panels increases by 1, the number of added PL RSs (e.g., increment delta) may decrease. If a plurality of tables are defined, a UE may report to a base station which table is supported (e.g., as UE capability). As an example of this, as shown in Table 11 below, when the number of panels increases for 3 panels, 3 candidates can be defined for the number of PL RSs (i.e., N2). In each N2 candidate, the PL RS addition according to the increase in the number of panels may be the same or different, and the increment may be zero in a specific duration. For example, a UE may report the second N2 candidate (i.e., N2 = {4, 7, 9}) in Table 11 below to a base station as a UE capability.

Table 11 illustrates a method of configuring a plurality of candidates for an N2 value according to the number of panels of a UE.

[Table 11]

| N2 candidates | Number of panels = 1 | Number of panels = 2 | Number of panels = 3 |
|---|---|---|---|
| 1 | 4 | 8 | 10 |
| 2 | 4 | 7 | 9 |
| 3 | 4 | 6 | 6 |

In the case of the above Embodiment 1-2, since only the number of total tracking PL RSs can be known from a UE's point of view, an imbalance problem in tracking PL RSs for each panel may occur. For example, a problem may occur when more than 4 PL RSs to a specific panel of a UE are tracked.

In order to prevent this problem, it is necessary to adjust the number of PL RS tracking per panel based on a UE capability. As an example of this, if a value range of N2 is 4 < N2 < (maximum number of panels that can be simultaneously activated (i.e., UE capability #2) $\times$ maximum number of PL RSs that can be tracked per panel (i.e., UE capability #3)), the number of tracking PL RSs for each panel can be determined by equally dividing the total number of tracking PL RSs by the maximum number of panels that can be simultaneously activated (i.e., N_act).

As another example, when a UE reports the maximum number of PL RSs that can be tracked per panel (i.e., UE capability #3) to a base station, the number of tracking PL RSs may be sequentially determined according to the number of UE capability #3 in ascending/decreasing order for panel ID. That is, the maximum number of PL RSs that can be tracked per panel (i.e., UE capability #3) is determined for each panel in ascending/descending order of panel ID, and the number of remaining PL RSs may be determined for the last panel. For example, it is assumed that the maximum number of PL RSs that can be tracked per panel (i.e., UE capability #3) = 4, N2 = 10, and the maximum number of panels that can be simultaneously activated (i.e., N_act) = 3. In this case, in ascending order, for example, the number of tracking PL RSs of panel ID 1 may be set to 4, the number of tracking PL RSs of panel ID 2 may be set to 4, and the number of tracking PL RSs of panel ID 3 can be set to 2 (Number of tracking PL RSs of {panel ID 1, panel ID 2, panel ID 3} = {4, 4, 2}).

Alternatively, a UE may report specific panel ID(s) to be tracked as many as the maximum number of PL RSs that can be tracked per panel (i.e., UE capability #3). In this case, the number of tracking PL RS of the reported panel(s) is determined, and for the remaining panel ID(s), the number of tracking PL RSs can be determined by equally dividing the number of tracking PL RSs from the number of remaining tracking PL RSs after being distributed to the previously designated panel(s). For example, it is assumed that the maximum number of PL RSs that can be tracked per panel (i.e., UE capability #3) = 4, N2 = 10, and the maximum number of panels that can be simultaneously activated (i.e., N_act) = 3. In addition, it is assumed that a UE reports panel ID 1 and panel ID 3 to a base station as specific panel IDs to be tracked by the maximum number of PL RSs that can be tracked per panel (i.e., UE capability #3). In this case, the number of tracking PL RSs of panel ID 1 may be set to 4, and the number of tracking PL RSs of panel ID 3 may be set to 4. In addition, the number of tracking PL RSs of panel ID 2 may be set to 2 (i.e., the number of remaining PL RSs).

The method for preventing the tracking PL RS imbalance problem for each panel described above can be equally applied even when the method of Embodiment 1-3 is used.

In the above method, since the number of PL RSs increases as the number of panels increases, a problem in that tracking overhead also increases linearly/non-linearly may occur. Accordingly, in another way (e.g., Embodiment 1-3), the maximum number of total tracking PL RSs may be limited to a specific N3 value. In this case, unlike the above-described Embodiment 1-2, the N3 value may be defined/configured as a value independent of the number of (activated) panels. In this case, if the value of N3 is configured too small (for example, N3 = 4), there may be a limit to the reflection of pathloss characteristics for each panel, so a UE may report the value of N3 to a base station.

Meanwhile, the above methods (e.g., Embodiment 1-1/ 1-2/ 1-3) describe a method of linearly/non-linearly increasing or limiting to a specific value according to the number of panels, regarding the number of PL RSs that a multi-panel UE can track.

Here, it is necessary to have a specific method for which panel a UE measures and tracks which PL RS(s) for the number of N1, N2, and N3 tracking PL RSs configured in each method. That is, based on the configuration method for a PL RS or a DL RS, an operation for PL RS tracking of a multi-panel UE can be specified. In other words, a mapping relationship between PL RSs configured by a base station and each panel of the multi-panel UE may be configured/defined.

Here, a mapping relationship between panels may be configured/defined based on a predetermined grouping of PL RSs. For example, PL RSs may be grouped in terms of DL RSs, or may be grouped into in terms of PL RS candidates configured for each target channel/ RS, or by designating a separate pool for PL RSs considering a UL TCI, which is currently being discussed in standardization, grouping can be performed for each PL RS pool.

i) First, an operation through grouping in terms of a DL RS will be described. According to this method, while maintaining the current standardization method, a delimiter for distinguishing a TRP for a DL RS may be introduced/configured. In addition, on the assumption that a different panel is used for each TRP, a base station can configure the maximum number of PL RSs activated for each TRP (e.g., up to 4). That is, DL RSs are grouped for each TRP and/or panel, and when configuring DL RSs, information on a group to which the corresponding DL RSs belong (e.g., group index/delimiter, etc.) may be included. Here, as information on the group, as will be described later, a TRP/panel delimiter, tag, etc. may be used, or a CORESET pool index may be used.

In this case, the contents described as 'per panel' in the previous Embodiment 1 and Embodiment 2 described later may be substituted with 'per TRP' or 'per DL RS group' and operated.

For example, delimiters (e.g., tagging/identifier) may be configured as TRP#0 (or panel#0, CORESET pool index=0) for CSI-RS #1 to #16 and TRP#1 (or panel#1, CORESET pool index=1) for CSI-RS #17 to #32, and the maximum number of activated PL RSs for each TRP delimiter (or tag/identifier) may be adjusted/configured to x (x is a natural number, e.g., 4) or less.

For example, TRPs/panels may be classified based on index/identification information, etc. for classification/identification among CORESETs configured/related to each TRP/panel. For example, a higher layer parameter for a control resource set (e.g., ControlResourceSet information element (IE)) is used to configure a time/frequency control resource set (CORESET). Here, for example, the control resource set (CORESET) may be related to detection and reception of downlink control information. The higher layer parameter (e.g., ControlResourceSet IE) for the control resource set may include a CORESET related identifier (ID) (e.g., controlResourceSetID) / a CORESET pool index for a CORESET (e.g., CORESETPoolIndex) / a time/frequency resource configuration of a CORESET / TCI information related to a CORESET, etc. Here, for example, a CORESET pool index (e.g., CORESETPoolIndex) may be set to 0 or 1. TRPs/panels may be classified based on the above-described a CORESET pool index (e.g., CORESETPoolIndex) (or CORESET group ID) .

For example, adjusting/configuring the maximum number of PL RSs activated for each TRP/panel to x (e.g., 4) or less may mean adjusting/configuring the number of PL RSs activated for each index of a CORESET pool (e.g., CORESETPoolIndex) (or for each CORESET corresponding to an index of a different CORESET pool (e.g., CORESETPoolIndex)). For example, a UE may track a PL RS associated with a specific CORESET pool index (e.g., CORESETPoolIndex) .

Therefore, each PL RS belongs to a specific group and can be configured to be associated with a different TRP/panel for each group. And, as described above, for example, each TRP/panel may be associated with a different CORESET pool index.

ii) Alternatively, a PL RS candidate (or PL RS pool) configured for each target channel/RS in the current standard may be used.

First, when a base station provides panel-common PL RS candidates to a UE through higher layer signaling (e.g., RRC, MAC CE, etc.) without distinguishing a PL RS for each panel, when activating a PL RS for each panel, PL RS candidates (up to 64) configured in a PUCCH/PUSCH/SRS can be equally utilized. In this case, a UE can expect that the total sum of PL RSs indicated for each panel does not exceed x (e.g., x is 4).

Alternatively, panel-specific PL RS candidates may be configured. That is, resources for a PL RS are divided for each panel, and a multi-panel UE operation based on this can be considered.

Here, PL RS candidates configured in a PUCCH/PUSCH/SRS may be extended and configured as much as the number of panels (e.g., up to 64*panels).

Alternatively, in the existing configuration, an operation may be performed uniformly/differently according to the number of panels. For example, if the number of panels is 2, it is assumed that 64 PL RS candidates for a PUCCH/PUSCH/SRS are configured. In this case, PL RS indexes/identifiers #1 to #32 may be associated with panel#1, and PL RS indexes/identifiers #33 to #64 may be associated with panel#2. Alternatively, in the form of a comb, panel#1 may be associated with PL RS indexes/identifiers {#1, #3, #5, ...}, panel#2 may be associated with PL RS indexes/identifiers {#2, #4, #6, ...} (and vice versa). Alternatively, odd-numbered PL RS candidates may be associated with panel#1, and even-numbered PL RS candidates may be associated with panel#2 (the reverse order/case is also possible).

In addition, it is possible to configure PL RS candidates for each panel separately, but apply the corresponding configuration (i.e., configuration which PL RS index/identifier is associated with which panel) to a PUCCH/PUSCH/SRS in common.

iii) Alternatively, a UL TCI state currently being discussed in the standardization phase may be introduced, and accordingly, a PL RS pool may be panel-specifically configured by higher layer signaling (e.g., RRC) (e.g., through a UL TCI state pool). In this case, a PL RS for a UL channel/RS related to each panel is configured in the PL RS pool related to the panel, so that the number of PL RSs for each panel may be adjusted/configured up to x (for example, x is 4). For example, a PL RS pool may be configured such as UL TCI state = {spatial relation RS = CRI#x, PL RS = CRI#y, panel ID = #z}. In addition, a PL RS configuration/indication for each PUCCH/PUSCH/SRS may be performed through a UL TCI indication (e.g., through MAC-CE or DCI) . Here, a UE can expect that the total sum of PL RSs indicated for each panel ID does not exceed x (e.g., x is 4).

Alternatively, when a PL RS pool is configured panel-commonly by higher layer signaling (e.g., RRC), a PL RS for a UL channel/RS related to each panel can be configured in a corresponding panel-common pool. And, by indicating a panel associated with a corresponding PL RS through an activation command/message of a PL RS for a specific UL channel/RS, the number of PL RSs for each panel can be adjusted/configured up to x (e.g., x=4). For example, a PL RS pool may be configured such as UL TCI = {spatial relation RS = CRI#x, PL RS = CRI#y, - }. In this case, a base station may also indicate a panel ID when performing a PL RS configuration/indication for each PUCCH/PUSCH/SRS through a UL TCI indication (by MAC CE or DCI). Alternatively, a base station may indicate a panel in an implicit manner through a corresponding PUCCH resource group ID and/or SRS resource set ID. Here, a UE can expect that the total sum of PL RSs indicated for each panel does not exceed x (e.g., x = 4).

When determining the number of the tracking PL RSs, whether the number of panels is calculated as the maximum number of panels that can be simultaneously activated (e.g., N_act) or 1 may be related to a degree of dynamics of panel switching. For example, when performing panel switching semi-statically (e.g., by RRC), since path loss is measured only for an activated panel from the point of view of a UE, the number of panels can be calculated only as 1. On the other hand, in the case of dynamic panel switching transmission mode or simultaneous transmission across multiple panels (STxMP) transmission mode, it is necessary to calculate the number of panels as much as the maximum number of panels (e.g., N_act) that can be activated simultaneously. That is, a method of calculating the number of tracking PL RSs according to a panel transmission mode may be different. Therefore, in order to satisfy previously reported UE capability, when a base station intends to indicate a UE to perform dynamic panel switching or STxMP, it can request/configure all PL RSs to be tracked in the panel in advance.

Here, in the above-described methods (e.g., Embodiment 1-1/ 1-2/ 1-3), when there is no explicit panel ID / panel index indication for a target UL channel/RS, ambiguity may occur as to which PL RS is applied and transmitted to which panel for the corresponding channel/RS. That is, if a base station recognizes the number of activated panels but does not recognize the activated panel identifier (panel ID)/panel index information, or if the panel ID is not explicitly revealed, this is because it is difficult to control the number of tracking PL RSs per panel. To solve this problem, the example method below can be considered.

For example, for a PUCCH, a PUCCH group index may correspond to a UL or DL panel identifier/index. For example, UL/DL panel indexes may correspond sequentially in ascending or descending order of PUCCH group index.

For example, for an SRS, in an SRS resource set index for each usage, UL or DL panel indexes may be sequentially corresponded to from the lowest set index for a specific usage. For example, assuming that SRS resource set #4 for CB (codebook) and SRS resource set #9 for CB are configured, SRS resource set #4 may correspond to panel 0, and SRS resource set #9 may correspond to panel 1. Alternatively, assuming that SRS resource set #2 for NCB (non-codebook) and SRS resource set #11 for NCB are configured, SRS resource set #2 corresponds to panel 0, and SRS resource set #11 corresponds to panel 0. can correspond to 1.

For example, for a PUSCH, the following method may be used.

Alt1) The SRS resource (set) described above is indicated in an SRS resource indicator (SRI) field in scheduling DCI, and a UL panel and a PL RS corresponding to the SRS resource (set) indicated by the SRI field may be followed as they are. That is, through a corresponding relationship between a preconfigured SRS resource set index and a UL or DL panel index, the number of PL RSs per panel may not exceed x (e.g., x=4).

Alt2) An SRI codepoint (or codepoint group) may be configured to correspond to a panel. And, a PL RS to be activated for each codepoint (or codepoint group) can be configured. For example, codepoints 000 to 011 (i.e., codepoint group 1) may correspond to panel 0, and codepoints 100 to 111 (i.e., codepoint group 2) may correspond to panel 1. In addition, PL RSs to be activated for each codepoint may be configured so that the number of PL RSs per panel does not exceed x (e.g., x=4).

Alt3) A PL RS may be activated for each transmission panel at each SRI codepoint. That is, a PL RS activated according to a transmission panel for each SRI codepoint may be different. For example, when codepoint 000 is indicated, PL RS index 3 can be activated for panel 0, and PL RS index 5 can be activated for panel 1. For example, a corresponding relationship between an SRI codepoint (/codepoint group) and a panel may be predefined or configured through higher layer signaling (e.g., RRC).

Here, when considering all of the PUCCH/SRS/PUSCH, it is possible for a base station to configure the number of PL RSs activated per panel to x (e.g., 4) or less.

Embodiment 2: (For a multi-panel UE) A UE reports preferred DL RS(s) for each panel to a base station, and the UE may track path loss for some or all of the corresponding DL RS(s).

As an embodiment of reporting on the preferred DL RS(s) per panel, preferred panel information (e.g., panel ID/ UL resource (group) ID (e.g., SRS resource set ID)) may be added to CSI (e.g., L1-RSRP/SINR) information and transmitted.

A starting time of PL tracking for a preferred DL RS reported by a UE may differ depending on whether the corresponding RS is a PL RS (which the UE has been tracking or has been active). If the preferred DL RS reported by a UE is an RS that has been not tracked by the UE, has been not activated, or does not belong to a PL RS pool, after reporting on the corresponding DL RS, the UE may perform tracking on the corresponding DL RS after a specific defined/configured time.

Here, the above-described operation can be limitedly applied only when the maximum number of tracking PL RSs that can be performed by a UE is greater than the number of currently tracking PL RSs. In other words, for {(the maximum number of tracking PL RSs that a UE can perform) - (the number of PL RSs tracked so far) = M}, when M is a positive number, it can be applied restrictively. If the number of preferred DL RSs reported by a UE is greater than the M value (e.g., currently M = 1, but the UE reports 2 CRIs), only M number of RSs may be selected according to a specific rule (e.g., highest L1-RSRP/SINR) and included in the tracking PL RS.

A rule for selecting a tracking PL RS for each panel is described.

First, when a corresponding DL RS reported by a UE is included in a PL RS pool, the corresponding PL RS ID may be activated.

On the other hand, when a first DL RS reported by a UE is not included in a PL RS pool, if a second DL RS identical to a QCL Type-D reference RS configured/activated in the corresponding first DL RS exists among PL RSs in the pool, a PL RS ID corresponding to the corresponding second DL RS may be activated.

In addition, when a corresponding DL RS reported by a UE is a CSI-RS, if a QCL Type-D reference RS configured/activated in the corresponding CSI-RS is an SSB (/CSI-RS), and if CSI-RS(s) referring to the corresponding SSB (CSI-RS) as a QCL Type-D reference RS exist in a PL RS pool, a PL RS ID corresponding to the lowest or highest ID among the corresponding CSI-RS(s) may be activated.

According to the current standard, when a base station activates a specific PL RS through a MAC-CE by utilizing preferred beam/RS information of a UE, the UE performs an operation of tracking the activated PL RS. The above-described proposed operation means a method of determining a tracking PL RS only by reporting a preferred DL RS of a UE before (or without) activation of a base station. In contrast to the existing operation, since the proposed operation is based on a UE-initiated operation, it has the advantage of reducing delay compared to MAC-CE based PL RS activation and being able to directly or indirectly control (handling) the Maximum Permissible Exposure (MPE).

Regarding the above-described Embodiments 1 and 2, it may not be desirable to simply calculate the maximum number of PL RSs tracked by a UE as the number of activated PL RSs. For example, when one panel-common single PL RS is activated for a specific UL channel/RS to a UE with the maximum number of panels that can be simultaneously activated (e.g., N_act) = 2, it is necessary to calculate the corresponding tracking PL RS not as 1 but as 2 as many as the number of active panels. This is because, as described above, a dominant path for each panel for the same PL RS from a UE's point of view may be different and a pathloss measurement value may be different. That is, considering that a PL (pathloss) measurement value may be different for each panel for the same PL RS from a UE's point of view, from a viewpoint of PL RS tracking in terms of implementation, it is preferable to effectively calculate two PL RSs.

An example of the number of effective PL RS tracking according to the number of activated panels will be described in terms of PUCCH transmission power control. In the following PUCCH power control function, it may be necessary to extend the $PL_{b,f,c}$ value, which is a pathloss compensation value calculation term, to a panel domain.

When a UE performs PUCCH transmission in an activated UL BWP (b) of a carrier (f) of a primary cell (or secondary cell) (c) using a PUCCH power control adjustment state based on index l, the UE may determine PUCCH transmission power $P_{PUCCH,b,f,c}(i,q_u,q_d,l)$ (dBm) at a PUCCH transmission occasion (i) based on Equation 7 below.

【Equation 7】

$$P_{\text{PUCCH},b,f,c}(i,q_u,q_d,l) = \min\left\{\begin{array}{l} P_{\text{CMAX},f,c}(i), \\ P_{\text{O\_PUCCH},b,f,c}(q_u) + 10\log_{10}(2^\mu \cdot M_{\text{RB},b,f,c}^{\text{PUCCH}}(i)) + PL_{b,f,c}(q_d) + \Delta_{\text{F\_PUCCH}}(F) + \Delta_{\text{TF},b,f,c}(i) + g_{b,f,c}(i,l) \end{array}\right\}$$

The description of the terms of Equation 7 is the same as the description of Equation 4 described above, so it is omitted.

That is, for a value of $PL_{b,f,c}$, in addition to an activated BWP b of a carrier f in a primary cell c, a value of a panel identifier (ID) p may be considered (i.e., $PL_{p,b,f,c}$). Therefore, by considering a panel ID, even when transmitting the same PUCCH resource through a single panel-common PL RS (i.e., for $q_d$ of the same PL RS ID), a pathloss compensation value $PL_{p,b,f,c}$ may vary depending on which panel of a UE the corresponding PUCCH resource is transmitted. In addition, as described above, even when a single PL RS is activated, it is necessary to calculate the number of effective tracking PL RSs by the number of corresponding panels according to the number of (activated) panels simultaneously tracking the single PL RS for UL channel/RS transmission. A base station may configure/activate PL RS tracking so as not to exceed a UE capability for simultaneously tracking PL RSs of a UE in consideration of the number of effective tracking PL RSs.

In addition, a case in which a base station does not explicitly configure/indicate a panel ID in transmission of a UL channel/RS of a UE or a case in which a base station does not recognize a transmission panel when transmitting a specific UL channel/RS of a UE may be considered. In this case, instead of correcting a pathloss compensation value $PL_{b,f,c}$ as described above, it may be assumed between a base station and a UE that the UE uses a result of measuring a PL RS with a panel/beam corresponding to (or the same as) a panel/beam to be used for a corresponding UL channel/signal transmission when calculating pathloss.

On the other hand, a UE operation in a panel-specific PL RS pool configuration scenario may be performed as follows. In this case, in terms of PUCCH transmission power control, for example, in $PL_{b,f,c}$ value, which is a pathloss compensation calculation term in the PUCCH power control function, a input variable $q_d$ needs to exist for each panel ID. For example, since a PL RS can be configured differently for each panel, $q_d$ related to a PL RS can be applied differently for each panel.

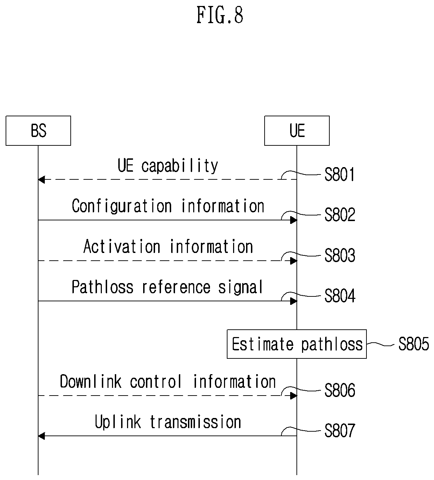

FIG. 8 is a diagram illustrating a signaling procedure between a base station and a UE for a method for transmitting and receiving an uplink signal according to an embodiment of the present disclosure.

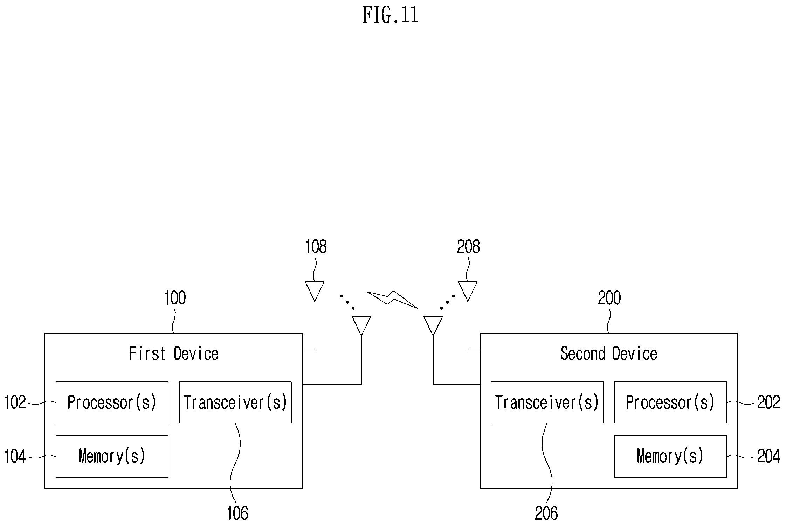

FIG. 8 illustrates a signaling procedure between a user equipment (UE) and a base station (BS) based on the previously proposed method (e.g., at least one of Embodiment 1 and Embodiment 2). The example of FIG. 8 is for convenience of description and does not limit the scope of the present disclosure. Some step(s) illustrated in FIG. 8 may be omitted depending on circumstances and/or settings. In addition, a base station and a UE in FIG. 8 are only examples, and may be implemented as the device illustrated in FIG. 11 below. For example, the processor 102/202 of FIG. 11 may control to transmit and receive channels/signals/data/information, etc. using the transceiver 106/206, and may control to store transmitted or received channels/signals/data/information in the memory 104/204.

In addition, in the operation between a base station and a UE of FIG. 8, the above-described technical description (e.g., uplink power control, etc.) may be referenced/used.

A base station may be a general term for an object that transmits and receives data with a UE. For example, the base station may be a concept including one or more transmission points (TPs), one or more transmission and reception points (TRPs), etc. In addition, a TP and/or a TRP may include a panel of a base station, a transmission and reception unit, etc. In addition, the "TRP" may be replaced with expressions such as a panel, an antenna array, a cell (e.g., macro cell / small cell / pico cell, etc.), a transmission point (TP), a base station (gNB, etc.), etc. As described above, TRPs may be classified according to information (e.g., index, ID) on a CORESET group (or CORESET pool). For example, when one UE is configured to transmit and receive multiple TRPs (or cells), this may mean that multiple CORESET groups (or CORESET pools) are configured for one UE. Configuration of such a CORESET group (or CORESET pool) may be performed through higher layer signaling (e.g., RRC signaling, etc.).

Referring to FIG. 8, for convenience of description, signaling between one base station and a UE is considered, but the corresponding signaling scheme may be extended and applied to signaling between multiple TRPs and multiple UEs. In the following description, a base station may be interpreted as one TRP. Alternatively, a base station may include a plurality of TRPs, or may be one cell including a plurality of TRPs.

Referring to FIG. 8, a user equipment (UE) may transmit UE capability to a base station (BS) (S801). That is, a base station may receive a report of UE capability from a UE. The UE capability may be information on capability of a UE to perform the methods proposed in this disclosure. For example, as described in the above-described proposed methods (e.g., Embodiment 1/Embodiment 2, etc.), the UE capability may include information such as the number of panels that can be supported by a UE/ the maximum number of panels that can be simultaneously activated/ the maximum number of PL RSs that can be tracked per panel/ the maximum number of PL RSs that can be tracked by a UE, etc.

A UE may receive configuration information from a base station (S802). That is, a base station may transmit configuration information to a UE.

The configuration may include system information (SI) and/or scheduling information and/or a beam management (BM) related configuration (e.g., a higher layer parameter for CSI resource configuration (CSI-ResourceConfig IE) / a higher layer parameter for NZP CSI-RS resource set (NZP CSI-RS resource set IE), etc.) and/or information related to base station configuration (i.e., TRP configuration) / a component carrier (CC)/BWP related configuration / a CORESET related configuration / a default beam related configuration (e.g., default spatial relation, etc.), etc. The configuration information may be transmitted to a higher layer (e.g., RRC or MAC CE) . In addition, when the configuration information is predefined or preconfigured in advance, the corresponding step may be omitted.

For example, as described in the above-described proposed methods (e.g., Embodiment 1/Embodiment 2, etc.), the configuration information may include an uplink channel related configuration (e.g., a PUCCH-related configuration (e.g., PUCCH-config)/ a PUSCH-related configuration (e.g., PUSCH-config)) / an SRS-related configuration (e.g., SRS-Config)). For example, the SRS-related configuration (e.g., SRS-Config) includes SRS resource/SRS resource set-related information. For example, an uplink channel-related configuration (e.g., PUCCH-config/ PUSCH-config) may include resource information (resource/resource set)/ resource group information (e.g., PUCCH group ID)/ power control configuration information/ PL RS related configuration information/ spatial relation information, etc. The configuration information may include PL RS information/ information related to the number of PL RSs for PL tracking (e.g., N1/N2/N3). For example, PL RS information may include information (e.g., identifier/index) of reference signals (e.g., CSI-RS/SS block) used for pathloss estimation. In addition, the configuration information may include information indicating which of a plurality of panels of a UE should perform PL RS tracking.

A UE may receive activation information (e.g., information for activation/update of a PL RS) from a base station (S803). That is, a base station may transmit activation information (e.g., information for activation/update of a PL RS) to a UE. For example, the activation information may be transmitted through MAC-CE signaling. For example, as described in the above-described proposed methods (e.g., Embodiment 1/Embodiment 2, etc.), the activation information may include activation/deactivation/update indication information for a PL RS. For example, among PL RSs configured by the configuration information, a PL RS for multiple panels may be activated/deactivated/updated based on the activation information.

A UE receives one or more pathloss reference signals (PL RSs) from a base station (S804). That is, a base station transmits one or more pathloss reference signals (PL RSs) to a UE.

Here, the one or more received PL RSs may be one or more PL RSs previously configured by configuration information. In addition, the one or more received PL RSs may be one or more PL RSs previously configured by configuration information and activated by activation information.

A UE estimates/measures pathloss using one or more received PL RSs (S805).

That is, a UE calculates a pathloss estimation value using one or more received PL RSs.

For example, based on the above-described proposed methods (e.g., Embodiment 1/Embodiment 2, etc.), a UE may perform tracking on the PL RS associated with an uplink channel/signal (e.g., PUCCH/SRS/PUSCH) (i.e., a pathloss estimation value may be calculated using the received PL RS).

Based on the above-described proposed methods (e.g., Embodiment 1/Embodiment 2, etc.), for example, PL RS tracking may be performed for each panel. For example, a UE may perform tracking of a PL RS in a range where the number of tracking PL RSs per panel does not exceed a specific value (e.g., 4).

In addition, according to the above-described proposed methods (e.g., Embodiment 1/Embodiment 2, etc.), based on the UE supporting multi-panels, the maximum number of PL RSs configurable for the UE may be determined based on the number of panels of the UE.

For example, as in Embodiment 1-1, the maximum number of PL RSs configurable for the UE may be configured to N1 (N1 is a natural number) for each panel.

In addition, as in Embodiment 1-2, the maximum number of PL RSs configurable for the UE may be set to N2 (N2 is a natural number) . Here, the N2 value may be configured to increase linearly or non-linearly as the number of activated panels of the UE increases. In addition, a plurality of candidates for the N2 value according to the number of activated panels of the UE may be configured, and a candidate supported by the UE among the plurality of candidates may be reported to the base station (e.g., through UE capability).

In addition, as in Embodiment 1-3, the maximum number of PL RSs configurable for the UE may be configured to N3 (N3 is a natural number).

In addition, as described above, in calculating the maximum number of the one or more PL RSs, the number of effective PL RSs may be considered. For example, based on pathloss estimation being performed on the same PL RS in different panels, the number of the same PL RSs may be calculated as the number of panels on which pathloss estimation is performed.

When the number of PL RSs is not determined for each panel as in the values of N2 and N3, for the N2 and N3, the number of PL RSs capable of estimating the maximum pathloss per panel is determined for each panel in ascending or descending order of panel identifiers, and the number of remaining PL RSs may be determined for the last panel. In addition, one or more panels for which pathloss estimation can be maximally per panel are reported to the base station (e.g., through UE capability), and for the N2 and N3 values, the maximum number of PL RSs for which pathloss can be estimated per panel is determined for each of the one or more reported panels and the number of remaining PL RSs may be equally divided and determined for the remaining panels.

In addition, as described above, a UE supporting multi-panels may report preferred DL RS(s) for each panel to a base station, and the UE may track pathloss for some or all of the corresponding DL RS(s).

In addition, based on the above-described proposed methods (e.g., Embodiment 1/Embodiment 2, etc.), an association relationship between a configured PL RS and a panel of a UE may be configured. That is, with respect to a tracking PL RS (i.e., activated PL RS) configured for a UE, it can be configured which PL RS(s) the UE measures and performs tracking with which panel.

For example, DL RSs (in particular, DL RSs that can be configured as PL RSs) may be grouped for each panel (and/or for each TRP). In addition, as described above, the corresponding grouping may be distinguished by a CORESET pool index. That is, downlink RSs that can be configured as PL RSs are grouped for each panel, and a panel associated with the one or more PL RSs can be determined based on a group to which the one or more PL RSs belong. In other words, a UE may determine a panel for measuring/tracking the corresponding PL RS according to which group the corresponding PL RS belongs to for each tracking PL RS (i.e., activated PL RS).

As another example, PL RS candidates for each target channel/RS may be panel-commonly configured. For example, a PL RS for a PUCCH may be panel-commonly configured, a PL RS for a PUSCH may be panel-commonly configured, and a PL RS for an SRS may be panel-commonly configured. In this case, when activating a PL RS for a target channel/RS, a base station may implicitly or explicitly indicate to a UE a panel associated with the PL RS. Alternatively, PL RS candidates for each target channel/RS may be panel-specifically configured. In this case, a panel associated with the one or more PL RSs may be determined based on PL RS candidates to which the one or more PL RSs belong. In other words, a UE may determine a panel for measuring/tracking the corresponding PL RS according to which candidates the corresponding PL RS belongs to for each tracking PL RS (i.e., activated PL RS).

As another example, a UL TCI state includes information on a PL RS and a panel, and accordingly, an association between a PL RS and a panel may be configured. A UL TCI state pool for these UL TCI states may be configured. That is, an uplink TCI state pool for uplink TCI state states including information on a PL RS and a panel may be configured. In addition, based on an uplink TCI state configured for the uplink transmission in the uplink TCI state pool, a panel associated with the one or more PL RSs may be determined. That is, a UE can be configured with a PL RS by information in a UL TCI state configured for a target UL channel/RS, and can determine a panel for measuring/tracking the corresponding PL RS. In addition, a UL TCI state includes a PL RS, but may not include information on a panel. That is, a PL RS pool can be panel-commonly configured. In this case, when a base station indicates a UL TCI state for a target channel/RS, it may implicitly or explicitly indicate a panel associated with a PL RS to a UE.

In the present disclosure, tracking a PL RS by a UE may mean performing steps S804 and S805 above.

A UE may receive control information from a base station (S806). That is, a base station may transmit control information to a UE. The control information may be received through a control channel (e.g., PDCCH). As an example, the control information may be DCI. For example, the control information may include scheduling information for a downlink data channel (e.g., PDSCH)/ a uplink channel (e.g., PUCCH/PUSCH), etc. For example, the control information may include an SRI field/ a TCI field/ a TCI field for uplink transmission.

A UE may perform uplink transmission to a base station (S807). That is, a base station can receive an uplink data/channel/signal from a UE. The uplink transmission may be an uplink channel (e.g., PUCCH/PUSCH) or an uplink signal (e.g., SRS) . For example, the uplink transmission may be performed based on information configured/indicated in steps S802/S803/S806 described above. In addition, a UE may perform the uplink transmission based on pathloss estimated in step S805.

In addition, based on the above-described proposed methods (e.g., Embodiment 1/Embodiment 2, etc.), an association between uplink transmission of a UE and a panel of the UE may be configured.

For example, when the uplink transmission is PUCCH transmission, a panel for the PUCCH transmission may be determined based on a PUCCH group index for the PUCCH transmission. In addition, when the uplink transmission is SRS transmission, a panel for the SRS transmission may be determined based on an SRS resource set index for the SRS transmission. In addition, when the uplink transmission is PUSCH transmission, a panel for the PUSCH transmission may be determined based on an SRS resource indicator (SRI) codepoint in downlink control information (DCI) for scheduling the PUSCH transmission.

In addition, based on the above-described proposed methods (e.g., Embodiment 1/Embodiment 2, etc.), a UE may perform power control for uplink transmission. Through this, transmit power for uplink transmission may be determined. For example, for power control for uplink transmission, the above-described technical description related to uplink power control may be referred to/used.

For example, a UE may perform uplink transmission based on the determined transmit power. For example, the uplink transmission may include PUCCH/SRS/PUSCH transmission/CSI reporting.

In addition, although not shown in FIG. 8, the step of reporting preferred downlink RS information per panel to a base station by a UE may be further included. In this case, a UE may perform pathloss estimation for the reported downlink RS without configuration and/or activation by a base station. Here, the pathloss estimation of the reported downlink RS may be performed only when the maximum number of PL RSs for which pathloss estimation is possible by the UE is greater than the number of PL RSs currently under pathloss estimation. Alternatively, only when the reported downlink RS is not included in a PL RS pool of the UE and a first downlink RS configured as a quasi co-location (QCL) reference RS in the reported downlink RS is included in a PL RS pool of the UE, pathloss estimation of the first downlink RS may be performed. Alternatively, only when the reported downlink RS is not included in a PL RS pool of the UE and a second downlink RS referring to a first downlink RS as a quasi co-location (QCL) reference RS, the first downlink RS being configured as a quasi co-location (QCL) reference RS in the reported downlink RS is included in a PL RS pool of the UE, pathloss estimation of the second downlink RS may be performed.

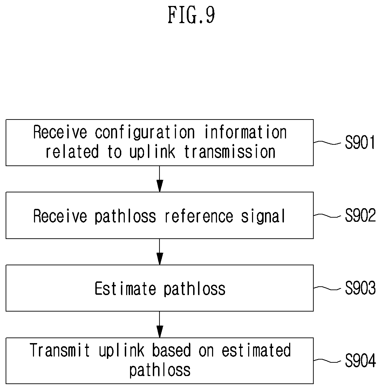

FIG. 9 is a diagram illustrating an operation of a UE for an uplink transmission and reception method according to an embodiment of the present disclosure.

FIG. 9 illustrates an operation of a UE based on the previously proposed method (e.g., at least one of Embodiment 1 and Embodiment 2). The example of FIG. 9 is for convenience of description and does not limit the scope of the present disclosure. Some step(s) illustrated in FIG. 9 may be omitted depending on circumstances and/or settings. In addition, a UE in FIG. 9 is only an example, and may be implemented as the device illustrated in FIG. 11 below. For example, the processor 102/202 of FIG. 11 may control to transmit and receive channels/signals/data/information (e.g., RRC signaling, MAC CE, DCI for UL/DL scheduling, SRS, PDCCH, PDSCH, PUSCH, PUCCH, PHICH, etc.), etc. using the transceiver 106/206, and may control to store transmitted or received channels/signals/data/information in the memory 104/204.

Meanwhile, although not shown in FIG. 9, a UE may transmit UE capability to a base station. The UE capability may be information on capability of a UE to perform the methods proposed in this disclosure. For example, as described in the above-described proposed methods (e.g., Embodiment 1/Embodiment 2, etc.), the UE capability may include information such as the number of panels that can be supported by a UE/ the maximum number of panels that can be simultaneously activated/ the maximum number of PL RSs that can be tracked per panel/ the maximum number of PL RSs that can be tracked by a UE, etc.

Referring to FIG. 9, a Ue may receive configuration information related to uplink transmission from a base station (S901).

For example, as described in the above-described proposed methods (e.g., Embodiment 1/Embodiment 2, etc.), the configuration information may include an uplink channel related configuration (e.g., a PUCCH-related configuration (e.g., PUCCH-config)/ a PUSCH-related configuration (e.g., PUSCH-config)) / an SRS-related configuration (e.g., SRS-Config)). For example, the SRS-related configuration (e.g., SRS-Config) includes SRS resource/SRS resource set-related information. For example, an uplink channel-related configuration (e.g., PUCCH-config/ PUSCH-config) may include resource information (resource/resource set)/ resource group information (e.g., PUCCH group ID)/ power control configuration information/ PL RS related configuration information/ spatial relation information, etc. The configuration information may include PL RS information/ information related to the number of PL RSs for PL tracking (e.g., N1/N2/N3). For example, PL RS information may include information (e.g., identifier/index) of reference signals (e.g., CSI-RS/SS block) used for pathloss estimation. In addition, the configuration information may include information indicating which of a plurality of panels of a UE should perform PL RS tracking.

In addition, although not shown in FIG. 9, a UE may receive activation information (e.g., information for activation/update of a PL RS) from a base station. For example, the activation information may be transmitted through MAC-CE signaling. For example, as described in the above-described proposed methods (e.g., Embodiment 1/Embodiment 2, etc.), the activation information may include activation/deactivation/update indication information for a PL RS. For example, among PL RSs configured by the configuration information, a PL RS for multiple panels may be activated/deactivated/updated based on the activation information.

Referring again to FIG. 9, a UE receives one or more pathloss reference signals (PL RS) from a base station.

Here, the one or more received PL RSs may be one or more PL RSs previously configured by configuration information. In addition, the one or more received PL RSs may be one or more PL RSs previously configured by configuration information and activated by activation information.

A UE estimates/measures pathloss using one or more received PL RSs (S903).

For example, based on the above-described proposed methods (e.g., Embodiment 1/Embodiment 2, etc.), a UE may perform tracking on the PL RS associated with an uplink channel/signal (e.g., PUCCH/SRS/PUSCH) (i.e., a pathloss estimation value may be calculated using the received PL RS).

Based on the above-described proposed methods (e.g., Embodiment 1/Embodiment 2, etc.), for example, PL RS tracking may be performed for each panel. For example, a UE may perform tracking of a PL RS in a range where the number of tracking PL RSs per panel does not exceed a specific value (e.g., 4).

In addition, according to the above-described proposed methods (e.g., Embodiment 1/Embodiment 2, etc.), based on the UE supporting multi-panels, the maximum number of PL RSs configurable for the UE may be determined based on the number of panels of the UE.

For example, as in Embodiment 1-1, the maximum number of PL RSs configurable for the UE may be configured to N1 (N1 is a natural number) for each panel.

In addition, as in Embodiment 1-2, the maximum number of PL RSs configurable for the UE may be set to N2 (N2 is a natural number) . Here, the N2 value may be configured to increase linearly or non-linearly as the number of activated panels of the UE increases. In addition, a plurality of candidates for the N2 value according to the number of activated panels of the UE may be configured, and a candidate supported by the UE among the plurality of candidates may be reported to the base station (e.g., through UE capability).

In addition, as in Embodiment 1-3, the maximum number of PL RSs configurable for the UE may be configured to N3 (N3 is a natural number).

In addition, as described above, in calculating the maximum number of the one or more PL RSs, the number of effective PL RSs may be considered. For example, based on pathloss estimation being performed on the same PL RS in different panels, the number of the same PL RSs may be calculated as the number of panels on which pathloss estimation is performed.

When the number of PL RSs is not determined for each panel as in the values of N2 and N3, for the N2 and N3, the number of PL RSs capable of estimating the maximum pathloss per panel is determined for each panel in ascending or descending order of panel identifiers, and the number of remaining PL RSs may be determined for the last panel. In addition, one or more panels for which pathloss estimation can be maximally per panel are reported to the base station (e.g., through UE capability), and for the N2 and N3 values, the maximum number of PL RSs for which pathloss can be estimated per panel is determined for each of the one or more reported panels and the number of remaining PL RSs may be equally divided and determined for the remaining panels.

In addition, as described above, a UE supporting multi-panels may report preferred DL RS(s) for each panel to a base station, and the UE may track pathloss for some or all of the corresponding DL RS(s).

In addition, based on the above-described proposed methods (e.g., Embodiment 1/Embodiment 2, etc.), an association relationship between a configured PL RS and a panel of a UE may be configured. That is, with respect to a tracking PL RS (i.e., activated PL RS) configured for a UE, it can be configured which PL RS(s) the UE measures and performs tracking with which panel.

For example, DL RSs (in particular, DL RSs that can be configured as PL RSs) may be grouped for each panel (and/or for each TRP). In addition, as described above, the corresponding grouping may be distinguished by a CORESET pool index. That is, downlink RSs that can be configured as PL RSs are grouped for each panel, and a panel associated with the one or more PL RSs can be determined based on a group to which the one or more PL RSs belong. In other words, a UE may determine a panel for measuring/tracking the corresponding PL RS according to which group the corresponding PL RS belongs to for each tracking PL RS (i.e., activated PL RS).

As another example, PL RS candidates for each target channel/RS may be panel-commonly configured. For example, a PL RS for a PUCCH may be panel-commonly configured, a PL RS for a PUSCH may be panel-commonly configured, and a PL RS for an SRS may be panel-commonly configured. In this case, when activating a PL RS for a target channel/RS, a base station may implicitly or explicitly indicate to a UE a panel associated with the PL RS. Alternatively, PL RS candidates for each target channel/RS may be panel-specifically configured. In this case, a panel associated with the one or more PL RSs may be determined based on PL RS candidates to which the one or more PL RSs belong. In other words, a UE may determine a panel for measuring/tracking the corresponding PL RS according to which candidates the corresponding PL RS belongs to for each tracking PL RS (i.e., activated PL RS).

As another example, a UL TCI state includes information on a PL RS and a panel, and accordingly, an association between a PL RS and a panel may be configured. A UL TCI state pool for these UL TCI states may be configured. That is, an uplink TCI state pool for uplink TCI state states including information on a PL RS and a panel may be configured. In addition, based on an uplink TCI state configured for the uplink transmission in the uplink TCI state pool, a panel associated with the one or more PL RSs may be determined. That is, a UE can be configured with a PL RS by information in a UL TCI state configured for a target UL channel/RS, and can determine a panel for measuring/tracking the corresponding PL RS. In addition, a UL TCI state includes a PL RS, but may not include information on a panel. That is, a PL RS pool can be panel-commonly configured. In this case, when a base station indicates a UL TCI state for a target channel/RS, it may implicitly or explicitly indicate a panel associated with a PL RS to a UE.

In the present disclosure, tracking the PL RS by a UE may mean performing steps S902 and S903 above.

A UE may perform uplink transmission to a base station (S904).

The uplink transmission may be an uplink channel (e.g., PUCCH/PUSCH) or an uplink signal (e.g., SRS). For example, the uplink transmission may be performed based on configured/indicated information as described above. In addition, a UE may perform the uplink transmission based on pathloss estimated in step S903.

In addition, although not shown in FIG. 9, a UE may receive control information from a base station and perform uplink transmission based on the received control information. The control information may be received through a control channel (e.g., PDCCH) . As an example, the control information may be DCI. For example, the control information may include scheduling information for a downlink data channel (e.g., PDSCH)/ a uplink channel (e.g., PUCCH/PUSCH), etc. For example, the control information may include an SRI field/ a TCI field/ a TCI field for uplink transmission.

In addition, based on the above-described proposed methods (e.g., Embodiment 1/Embodiment 2, etc.), an association between uplink transmission of a UE and a panel of the UE may be configured.

For example, when the uplink transmission is PUCCH transmission, a panel for the PUCCH transmission may be determined based on a PUCCH group index for the PUCCH transmission. In addition, when the uplink transmission is SRS transmission, a panel for the SRS transmission may be determined based on an SRS resource set index for the SRS transmission. In addition, when the uplink transmission is PUSCH transmission, a panel for the PUSCH transmission may be determined based on an SRS resource indicator (SRI) codepoint in downlink control information (DCI) for scheduling the PUSCH transmission.

In addition, based on the above-described proposed methods (e.g., Embodiment 1/Embodiment 2, etc.), a UE may perform power control for uplink transmission. Through this, transmit power for uplink transmission may be determined. For example, for power control for uplink transmission, the above-described technical description related to uplink power control may be referred to/used.

For example, a UE may perform uplink transmission based on the determined transmit power. For example, the uplink transmission may include PUCCH/SRS/PUSCH transmission/CSI reporting.

In addition, although not shown in FIG. 9, the step of reporting preferred downlink RS information per panel to a base station by a UE may be further included. In this case, a UE may perform pathloss estimation for the reported downlink RS without configuration and/or activation by a base station. Here, the pathloss estimation of the reported downlink RS may be performed only when the maximum number of PL RSs for which pathloss estimation is possible by the UE is greater than the number of PL RSs currently under pathloss estimation. Alternatively, only when the reported downlink RS is not included in a PL RS pool of the UE and a first downlink RS configured as a quasi co-location (QCL) reference RS in the reported downlink RS is included in a PL RS pool of the UE, pathloss estimation of the first downlink RS may be performed. Alternatively, only when the reported downlink RS is not included in a PL RS pool of the UE and a second downlink RS referring to a first downlink RS as a quasi co-location (QCL) reference RS, the first downlink RS being configured as a quasi co-location (QCL) reference RS in the reported downlink RS is included in a PL RS pool of the UE, pathloss estimation of the second downlink RS may be performed.

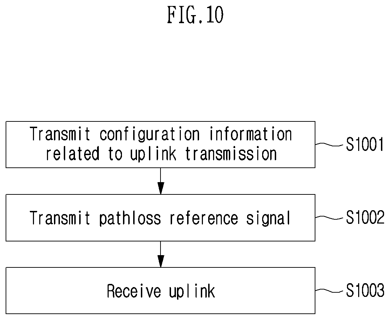

FIG. 10 is a diagram illustrating an operation of a base station for an uplink transmission and reception method according to an embodiment of the present disclosure.

FIG. 10 illustrates an operation of a UE based on the previously proposed method (e.g., at least one of Embodiment 1 and Embodiment 2). The example of FIG. 10 is for convenience of description and does not limit the scope of the present disclosure. Some step(s) illustrated in FIG. 10 may be omitted depending on circumstances and/or settings. In addition, a base station in FIG. 10 is only an example, and may be implemented as the device illustrated in FIG. 11 below. For example, the processor 102/202 of FIG. 11 may control to transmit and receive channels/signals/data/information (e.g., RRC signaling, MAC CE, DCI for UL/DL scheduling, SRS, PDCCH, PDSCH, PUSCH, PUCCH, PHICH, etc.), etc. using the transceiver 106/206, and may control to store transmitted or received channels/signals/data/information in the memory 104/204.

Meanwhile, although not shown in FIG. 10, a base station may receive UE capability from a UE. The UE capability may be information on capability of a UE to perform the methods proposed in this disclosure. For example, as described in the above-described proposed methods (e.g., Embodiment 1/Embodiment 2, etc.), the UE capability may include information such as the number of panels that can be supported by a UE/ the maximum number of panels that can be simultaneously activated/ the maximum number of PL RSs that can be tracked per panel/ the maximum number of PL RSs that can be tracked by a UE, etc.

Referring to FIG. 10, a base station may transmit configuration information related to uplink transmission to a UE (S1001).

For example, as described in the above-described proposed methods (e.g., Embodiment 1/Embodiment 2, etc.), the configuration information may include an uplink channel related configuration (e.g., a PUCCH-related configuration (e.g., PUCCH-config)/ a PUSCH-related configuration (e.g., PUSCH-config)) / an SRS-related configuration (e.g., SRS-Config)). For example, the SRS-related configuration (e.g., SRS-Config) includes SRS resource/SRS resource set-related information. For example, an uplink channel-related configuration (e.g., PUCCH-config/ PUSCH-config) may include resource information (resource/resource set)/ resource group information (e.g., PUCCH group ID)/ power control configuration information/ PL RS related configuration information/ spatial relation information, etc. The configuration information may include PL RS information/ information related to the number of PL RSs for PL tracking (e.g., N1/N2/N3). For example, PL RS information may include information (e.g., identifier/index) of reference signals (e.g., CSI-RS/SS block) used for pathloss estimation. In addition, the configuration information may include information indicating which of a plurality of panels of a UE should perform PL RS tracking.

In addition, although not shown in FIG. 10, a base station may transmit activation information (e.g., information for activation/update of a PL RS) to a UE. For example, the activation information may be transmitted through MAC-CE signaling. For example, as described in the above-described proposed methods (e.g., Embodiment 1/Embodiment 2, etc.), the activation information may include activation/deactivation/update indication information for a PL RS. For example, among PL RSs configured by the configuration information, a PL RS for multiple panels may be activated/deactivated/updated based on the activation information.

Referring to FIG. 9 again, a base station transmits one or more pathloss reference signals (PL RSs) to a UE (S1002).

Here, the one or more transmitted PL RSs may be one or more PL RSs previously configured by configuration information. In addition, the one or more transmitted PL RSs may be one or more PL RSs previously configured by configuration information and activated by activation information.

A base station may receive uplink transmission from a UE (S1003).

The uplink transmission may be an uplink channel (e.g., PUCCH/PUSCH) or an uplink signal (e.g., SRS). For example, the uplink transmission may be performed based on configured/indicated information as described above.

In addition, although not shown in FIG. 10, a base station may transmit control information to a UE and uplink transmission may be performed based on it. The control information may be transmitted through a control channel (e.g., PDCCH). As an example, the control information may be DCI. For example, the control information may include scheduling information for a downlink data channel (e.g., PDSCH)/ a uplink channel (e.g., PUCCH/PUSCH), etc. For example, the control information may include an SRI field/ a TCI field/ a TCI field for uplink transmission.

In addition, a UE may estimate/measure pathloss based on one or more PL RSs and perform the uplink transmission based on the estimated pathloss.

For example, based on the above-described proposed methods (e.g., Embodiment 1/Embodiment 2, etc.), a UE may perform tracking on the PL RS associated with an uplink channel/signal (e.g., PUCCH/SRS/PUSCH) (i.e., a pathloss estimation value may be calculated using the received PL RS).

Based on the above-described proposed methods (e.g., Embodiment 1/Embodiment 2, etc.), for example, PL RS tracking may be performed for each panel. For example, a UE may perform tracking of a PL RS in a range where the number of tracking PL RSs per panel does not exceed a specific value (e.g., 4).

In addition, according to the above-described proposed methods (e.g., Embodiment 1/Embodiment 2, etc.), based on the UE supporting multi-panels, the maximum number of PL RSs configurable for the UE may be determined based on the number of panels of the UE.

For example, as in Embodiment 1-1, the maximum number of PL RSs configurable for the UE may be configured to N1 (N1 is a natural number) for each panel.

In addition, as in Embodiment 1-2, the maximum number of PL RSs configurable for the UE may be set to N2 (N2 is a natural number) . Here, the N2 value may be configured to increase linearly or non-linearly as the number of activated panels of the UE increases. In addition, a plurality of candidates for the N2 value according to the number of activated panels of the UE may be configured, and a candidate supported by the UE among the plurality of candidates may be reported to the base station (e.g., through UE capability).

In addition, as in Embodiment 1-3, the maximum number of PL RSs configurable for the UE may be configured to N3 (N3 is a natural number).

In addition, as described above, in calculating the maximum number of the one or more PL RSs, the number of effective PL RSs may be considered. For example, based on pathloss estimation being performed on the same PL RS in different panels, the number of the same PL RSs may be calculated as the number of panels on which pathloss estimation is performed.

When the number of PL RSs is not determined for each panel as in the values of N2 and N3, for the N2 and N3, the number of PL RSs capable of estimating the maximum pathloss per panel is determined for each panel in ascending or descending order of panel identifiers, and the number of remaining PL RSs may be determined for the last panel. In addition, one or more panels for which pathloss estimation can be maximally per panel are reported to the base station (e.g., through UE capability), and for the N2 and N3 values, the maximum number of PL RSs for which pathloss can be estimated per panel is determined for each of the one or more reported panels and the number of remaining PL RSs may be equally divided and determined for the remaining panels.

In addition, as described above, a UE supporting multi-panels may report preferred DL RS(s) for each panel to a base station, and the UE may track pathloss for some or all of the corresponding DL RS(s).

In addition, based on the above-described proposed methods (e.g., Embodiment 1/Embodiment 2, etc.), an association relationship between a configured PL RS and a panel of a UE may be configured. That is, with respect to a tracking PL RS (i.e., activated PL RS) configured for a UE, it can be configured which PL RS(s) the UE measures and performs tracking with which panel.

For example, DL RSs (in particular, DL RSs that can be configured as PL RSs) may be grouped for each panel (and/or for each TRP). In addition, as described above, the corresponding grouping may be distinguished by a CORESET pool index. That is, downlink RSs that can be configured as PL RSs are grouped for each panel, and a panel associated with the one or more PL RSs can be determined based on a group to which the one or more PL RSs belong. In other words, a UE may determine a panel for measuring/tracking the corresponding PL RS according to which group the corresponding PL RS belongs to for each tracking PL RS (i.e., activated PL RS).

As another example, PL RS candidates for each target channel/RS may be panel-commonly configured. For example, a PL RS for a PUCCH may be panel-commonly configured, a PL RS for a PUSCH may be panel-commonly configured, and a PL RS for an SRS may be panel-commonly configured. In this case, when activating a PL RS for a target channel/RS, a base station may implicitly or explicitly indicate to a UE a panel associated with the PL RS. Alternatively, PL RS candidates for each target channel/RS may be panel-specifically configured. In this case, a panel associated with the one or more PL RSs may be determined based on PL RS candidates to which the one or more PL RSs belong. In other words, a UE may determine a panel for measuring/tracking the corresponding PL RS according to which candidates the corresponding PL RS belongs to for each tracking PL RS (i.e., activated PL RS).

As another example, a UL TCI state includes information on a PL RS and a panel, and accordingly, an association between a PL RS and a panel may be configured. A UL TCI state pool for these UL TCI states may be configured. That is, an uplink TCI state pool for uplink TCI state states including information on a PL RS and a panel may be configured. In addition, based on an uplink TCI state configured for the uplink transmission in the uplink TCI state pool, a panel associated with the one or more PL RSs may be determined. That is, a UE can be configured with a PL RS by information in a UL TCI state configured for a target UL channel/RS, and can determine a panel for measuring/tracking the corresponding PL RS. In addition, a UL TCI state includes a PL RS, but may not include information on a panel. That is, a PL RS pool can be panel-commonly configured. In this case, when a base station indicates a UL TCI state for a target channel/RS, it may implicitly or explicitly indicate a panel associated with a PL RS to a UE.

In addition, based on the above-described proposed methods (e.g., Embodiment 1/Embodiment 2, etc.), an association between uplink transmission of a UE and a panel of the UE may be configured.

For example, when the uplink transmission is PUCCH transmission, a panel for the PUCCH transmission may be determined based on a PUCCH group index for the PUCCH transmission. In addition, when the uplink transmission is SRS transmission, a panel for the SRS transmission may be determined based on an SRS resource set index for the SRS transmission. In addition, when the uplink transmission is PUSCH transmission, a panel for the PUSCH transmission may be determined based on an SRS resource indicator (SRI) codepoint in downlink control information (DCI) for scheduling the PUSCH transmission.

In addition, based on the above-described proposed methods (e.g., Embodiment 1/Embodiment 2, etc.), a UE may perform power control for uplink transmission, and a base station may receive uplink on which power control is performed. For example, for power control for uplink transmission, the above-described technical description related to uplink power control may be referred to/used.

For example, a UE may perform uplink transmission based on the determined transmit power, and a base station may receive it. For example, the uplink transmission may include PUCCH/SRS/PUSCH transmission/CSI reporting.

In addition, although not shown in FIG. 10, a base station may receive information of a downlink RS preferred by a UE per panel from the UE. In this case, a UE may perform pathloss estimation for the reported downlink RS without configuration and/or activation by a base station. Here, the pathloss estimation of the reported downlink RS may be performed only when the maximum number of PL RSs for which pathloss estimation is possible by the UE is greater than the number of PL RSs currently under pathloss estimation. Alternatively, only when the reported downlink RS is not included in a PL RS pool of the UE and a first downlink RS configured as a quasi co-location (QCL) reference RS in the reported downlink RS is included in a PL RS pool of the UE, pathloss estimation of the first downlink RS may be performed. Alternatively, only when the reported downlink RS is not included in a PL RS pool of the UE and a second downlink RS referring to a first downlink RS as a quasi co-location (QCL) reference RS, the first downlink RS being configured as a quasi co-location (QCL) reference RS in the reported downlink RS is included in a PL RS pool of the UE, pathloss estimation of the second downlink RS may be performed.

General Device to which the Present Disclosure may be applied

FIG. 11 is a diagram which illustrates a block diagram of a wireless communication device according to an embodiment of the present disclosure.

In reference to FIG. 11, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of uplink transmission in a wireless communication system, the method performed by a user equipment (UE) comprising:

   receiving, from a base station, configuration information related to uplink transmission;
   receiving one or more pathloss reference signals (PL RSs) configured by the configuration information;
   estimating a pathloss using the one or more PL RSs; and
   performing the uplink transmission based on the estimated pathloss,
   wherein based on the UE supporting multi-panels, a maximum number of PL RSs configurable for the UE is determined based on a number of panels of the UE.

2. The method of claim 1, wherein the maximum number of PL RSs configurable for the UE is configured to N1 (N1 is a natural number) for each panel.

3. The method of claim 1, wherein the maximum number of PL RSs configurable for the UE is configured to N2 (N2 is a natural number).

4. The method of claim 3, wherein a value of the N2 is configured to increase linearly or non-linearly as a number of activated panels of the UE increases.

5. The method of claim 3, wherein a plurality of candidates for a value of the N2 are configured according to a number of activated panels of the UE, and
   wherein a candidate supported by the UE among the plurality of candidates is reported to the base station.

6. The method of claim 3, wherein for a value of the N2, a number of PL RSs capable of maximum pathloss estimation per panel is determined for each panel in ascending or descending order of panel identifiers, and a number of remaining PL RSs is determined for a last panel.

7. The method of claim 3, wherein one or more panels for which maximum pathloss estimation per panel is possible is reported to the base station, and
   wherein for a value of the N2, a number of PL RSs capable of maximum pathloss estimation per panel is determined for each of the one or more reported panels, and a number of remaining PL RSs is equally divided and determined for remaining panels.

8. The method of claim 1, wherein downlink RSs configurable as PL RSs are grouped for each panel, and
   wherein a panel associated with the one or more PL RSs is determined based on a group to which the one or more PL RSs belong.

9. The method of claim 1, wherein PL RS candidates for the uplink transmission are individually configured for each panel, and
   wherein a panel associated with the one or more PL RSs is determined based on PL RS candidates to which the one or more PL RSs belong.

10. The method of claim 1, wherein a pool of uplink TCI states for an uplink transmission configuration indicator (TCI) state including information on a PL RS and a panel is configured, and
wherein based on an uplink TCI state configured for the uplink transmission in the pool of uplink TCI states, a panel associated with the one or more PL RSs is determined.

11. The method of claim 1, wherein when the uplink transmission is physical uplink control channel (PUCCH) transmission, a panel for the PUCCH transmission is determined based on a PUCCH group index for the PUCCH transmission.

12. The method of claim 1, wherein when the uplink transmission is sounding reference signal (SRS) transmission, a panel for the SRS transmission is determined based on an SRS resource set index for the SRS transmission.

13. The method of claim 1, wherein when the uplink transmission is physical uplink shared channel (PUSCH) transmission, a panel for the PUSCH transmission is determined based on a codepoint of an SRS resource indicator (SRI) in downlink control information (DCI) scheduling the PUSCH transmission.

14. The method of claim 1, further comprising:

transmitting capability information of the UE to the base station,
wherein the capability information of the UE includes one or more of a number of panels, a maximum number of panels that can be simultaneously activated, a maximum number of PL RSs that can be tracked per panel, and a maximum number of PL RSs that can be tracked.

15. The method of claim 1, further comprising:

reporting information of a preferred downlink RS per panel to the base station,
wherein pathloss estimation for the reported downlink RS is performed.

16. The method of claim 15, wherein based on a maximum number of PL RSs capable of estimating pathloss by the UE being greater than a number of PL RSs currently under pathloss estimation,
wherein pathloss estimation for the reported downlink RS is performed.

17. The method of claim 15, wherein based on the reported downlink RS being not included in a PL RS pool of the UE and a first downlink RS configured as a quasi co-location (QCL) reference RS for the reported downlink RS being included in the PL RS pool of the UE, pathloss estimation for the first downlink RS is performed.

18. The method of claim 15, wherein based on the reported downlink RS being not included in a PL RS pool of the UE and a second downlink RS that references a first downlink RS configured as a quasi co-location (QCL) reference RS for the reported downlink RS being included in the PL RS pool of the UE, pathloss estimation for the second downlink RS is performed.

19. The method of claim 1 wherein in calculating a maximum number of the one or more PL RSs, based on pathloss estimation being performed on the same PL RSs in different panels, a number of the same PL RSs is calculated as a number of panels on which pathloss estimation is performed.

20. The method of claim 1, wherein transmit power for the uplink transmission is determined based on a pathloss value estimated based on the one or more PL RSs.

21. A user equipment (UE) for uplink transmission in a wireless communication system, the UE comprising:

at least one transceiver for transmitting and receiving a wireless signal; and
at least one processor for controlling the at least one transceiver,
wherein the at least one processor configured to:

receive, from a base station, configuration information related to uplink transmission;
receive one or more pathloss reference signals (PL RSs) configured by the configuration information;
estimate a pathloss using the one or more PL RSs; and
perform the uplink transmission based on the estimated pathloss,
wherein based on the UE supporting multi-panels, a maximum number of PL RSs configurable for the UE is determined based on a number of panels of the UE.

22. At least one non-transitory computer-readable medium storing at least one instruction, wherein the at least one instruction executable by at least one processor controls a device for uplink transmission to:

receive, from a base station, configuration information related to uplink transmission;
receive one or more pathloss reference signals (PL RSs) configured by the configuration information;
estimate a pathloss using the one or more PL RSs; and
perform the uplink transmission based on the estimated pathloss,
wherein based on a user equipment (UE) supporting multi-panels, a maximum number of PL RSs configurable for the UE is determined based on a number of panels of the UE.

23. A processing apparatus configured to control a user equipment (UE) for uplink transmission in a wireless communication system, the processing apparatus comprising:

at least one processor; and
at least one computer memory operably connected to the at least one processor and storing instructions that, based on being executed by the at least one processor, perform operations comprising:

receiving, from a base station, configuration information related to uplink transmission;
receiving one or more pathloss reference signals (PL RSs) configured by the configuration information;
estimating a pathloss using the one or more PL RSs; and
performing the uplink transmission based on the estimated pathloss,
wherein based on the UE supporting multi-panels, a maximum number of PL RSs configurable for the UE is determined based on a number of panels of the UE.

24. A method of receiving an uplink in a wireless communication system, the method performed by a base station comprising:

transmitting, to a user equipment (UE), configuration information related to uplink transmission;
transmitting, to the UE, one or more pathloss reference signals (PL RSs) configured by the configuration information; and
receiving, from the UE, the uplink transmission,
wherein the uplink transmission is transmitted based on the estimated pathloss,
wherein based on the UE supporting multi-panels, a maximum number of PL RSs configurable for the UE is determined based on a number of panels of the UE.

25. A base station for receiving an uplink in a wireless communication system, the base station comprising:

at least one transceiver for transmitting and receiving a wireless signal; and
at least one processor for controlling the at least one transceiver,
wherein the at least one processor configured to:

transmit, to a user equipment (UE), configuration information related to uplink transmission;
transmit, to the UE, one or more pathloss reference signals (PL RSs) configured by the configuration information; and
receive, from the UE, the uplink transmission,
wherein the uplink transmission is transmitted based on the estimated pathloss,
wherein based on the UE supporting multi-panels, a maximum number of PL RSs configurable for the UE is determined based on a number of panels of the UE.

FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbols

## FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
– In a resource grid, $(k, \bar{l})$
– In a resource block, $(k, l)$

$k = 0$

$l = 0$

$l = 14 \cdot 2^{\mu} - 1$

# FIG.4

Freq.

1ms subframe:
14 symbols/slot

12 × 15 KHz

12 × 30 KHz

PRB

12 × 60 KHz

Time

FIG.5

FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

FIG.7

(a)

(b)

FIG.8

FIG.9

| | |
|---|---|
| Receive configuration information related to uplink transmission | S901 |
| ↓ | |
| Receive pathloss reference signal | S902 |
| ↓ | |
| Estimate pathloss | S903 |
| ↓ | |
| Transmit uplink based on estimated pathloss | S904 |

FIG.10

| Transmit configuration information related to uplink transmission | ∽S1001 |

| Transmit pathloss reference signal | ∽S1002 |

| Receive uplink | ∽S1003 |

FIG.11

<div align="center">**INTERNATIONAL SEARCH REPORT**</div>

| | International application No. |
|---|---|
| | **PCT/KR2021/013362** |

**A.     CLASSIFICATION OF SUBJECT MATTER**

**H04L 5/00**(2006.01)i; **H04B 7/0404**(2017.01)i; **H04B 7/06**(2006.01)i; **H04W 52/14**(2009.01)i; **H04W 72/12**(2009.01)i

According to International Patent Classification (IPC) or to both national classification and IPC

**B.     FIELDS SEARCHED**

Minimum documentation searched (classification system followed by classification symbols)

H04L 5/00(2006.01); H04B 7/06(2006.01); H04B 7/08(2006.01); H04W 52/14(2009.01); H04W 52/24(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 경로손실 참조 신호(pathloss reference signal), 다중 패널(multi-panel), 최대 (maximum), Sounding Reference Signal(SRS), 능력(capability), 추정(estimation)

**C.     DOCUMENTS CONSIDERED TO BE RELEVANT**

| Category* | Citation of document, with indication, where appropriate, of the relevant passages | Relevant to claim No. |
|---|---|---|
| Y | US 2019-0349867 A1 (LENOVO (SINGAPORE) PTE. LTD.) 14 November 2019 (2019-11-14)<br>      See claim 1. | 1-4,8-15,20-25 |
| A | | 5-7,16-19 |
| Y | US 2020-0235802 A1 (TELEFONAKTIEBOLAGET LM ERICSSON (PUBL)) 23 July 2020<br>(2020-07-23)<br>      See paragraphs [0016]-[0017] and [0062]; and claim 1. | 1-4,8-15,20-25 |
| Y | KR 10-2020-0038986 A (ZTE CORPORATION) 14 April 2020 (2020-04-14)<br>      See paragraph [0094]; and claim 5. | 8-11,15 |
| A | OPPO. Remaining Issues on Multi-beam Operation Enhancement. R1-2001727, 3GPP TSG RAN WG1 #1<br>00bis. e-Meeting. 10 April 2020.<br>      See section 2.1. | 1-25 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 January 2022** | **14 January 2022** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| | International application No. |
|---|---|
| | **PCT/KR2021/013362** |

**C.     DOCUMENTS CONSIDERED TO BE RELEVANT**

| Category* | Citation of document, with indication, where appropriate, of the relevant passages | Relevant to claim No. |
|---|---|---|
| A | ZTE. Enhancements on multi-beam operation. R1-1908192, 3GPP TSG RAN WG1 Meeting #98. Prague, CZ. 17 August 2019.<br>      See sections 2.1.2-2.1.3. | 1-25 |

Form PCT/ISA/210 (second sheet) (July 2019)

**INTERNATIONAL SEARCH REPORT**
**Information on patent family members**

International application No.

**PCT/KR2021/013362**

| Patent document cited in search report | | | Publication date (day/month/year) | Patent family member(s) | | | Publication date (day/month/year) |
|---|---|---|---|---|---|---|---|
| US | 2019-0349867 | A1 | 14 November 2019 | CN | 112088550 | A | 15 December 2020 |
| | | | | EP | 3791642 | A1 | 17 March 2021 |
| | | | | US | 10887843 | B2 | 05 January 2021 |
| | | | | US | 2021-0153137 | A1 | 20 May 2021 |
| | | | | WO | 2019-215709 | A1 | 14 November 2019 |
| US | 2020-0235802 | A1 | 23 July 2020 | EP | 3738217 | A1 | 18 November 2020 |
| | | | | US | 10742303 | B1 | 11 August 2020 |
| | | | | WO | 2019-158186 | A1 | 22 August 2019 |
| KR | 10-2020-0038986 | A | 14 April 2020 | CN | 108111278 | A | 01 June 2018 |
| | | | | CN | 108111278 | B | 18 September 2020 |
| | | | | CN | 112929139 | A | 08 June 2021 |
| | | | | EP | 3512150 | A1 | 17 July 2019 |
| | | | | JP | 2020-530241 | A | 15 October 2020 |
| | | | | KR | 10-2021-0121267 | A | 07 October 2021 |
| | | | | US | 10812239 | B2 | 20 October 2020 |
| | | | | US | 2019-0207722 | A1 | 04 July 2019 |
| | | | | US | 2021-0036815 | A1 | 04 February 2021 |
| | | | | WO | 2019-029343 | A1 | 14 February 2019 |

Form PCT/ISA/210 (patent family annex) (July 2019)